# EUROPEAN PATENT APPLICATION

(11) **EP 4 730 098 A1**
(43) Date of publication of application: **22.04.2026**
(21) Application number: 23950890.6
(22) Date of filing: 01.09.2023
(51) Int. Cl.: G06F 3/14, G06F 3/16, H04R 3/12, B60K 35/00

(54) **SIGNAL PROCESSING APPARATUS AND VEHICLE DISPLAY APPARATUS EQUIPPED WITH SAME**

(71) Applicant: LG Electronics Inc., Yeongdeungpo-gu Seoul 07336 (KR)
(72) Inventor: OH, Soohwan, Seoul 06772 (KR); YOON, Jaegu, Seoul 06772 (KR); SHIN, Kyungjun, Seoul 06772 (KR); KIM, Donghwan, Seoul 06772 (KR)
(74) Representative: Vossius & Partner Patentanwälte Rechtsanwälte mbB
(86) International application number: PCT/KR2023/013095
(87) International publication number: WO 2025/048015

(57) **Abstract**

A signal processing device and a display apparatus for vehicle including the same are disclosed. The signal processing device includes a processor configured to perform signal processing for a display mounted on a vehicle, wherein the processor is configured to execute a hypervisor, and execute first to third virtual machines on the hypervisor, the second virtual machine operates for a first display, the third virtual machine operates for a second display, the first virtual machine or the hypervisor is configured to execute a display manager to control an image displayed on the first or the second display and an audio manager to control a sound corresponding to the image displayed on the first or the second display, and the audio manager is configured to allocate corresponding audio signals to a plurality of speakers, respectively. Accordingly, it is possible to stably output a sound corresponding to the image.

## Description

### BACKGROUND

### 1. Field

. The present disclosure relates to a signal processing device and a display apparatus for vehicle including the same, and more particularly, to a signal processing device capable of stably outputting a sound corresponding to an image, and a display apparatus for vehicle including the same.

### 2. Description of the Related Art

. A vehicle is an apparatus that a driver moves in a desired direction. A representative example of the vehicle is a car.

. Meanwhile, a display apparatus for vehicle is mounted in the vehicle for convenience of users who use the vehicle.

. For example, a display is disposed in a cluster to display various kinds of information. Meanwhile, to display vehicle driving information, various displays, such as an audio video navigation (AVN) display, are mounted in the vehicle, in addition to the cluster.

. In the case in which the number of displays in the display apparatus for vehicle is increased, however, signal processing for the displays is complicated.

. Meanwhile, when images are displayed in a plurality of displays, there is a problem in that image signal processing and audio signal processing become complicated.

### SUMMARY

. An object of the present disclosure is to provide a signal processing device capable of stably outputting a sound corresponding to an image, and a display apparatus for vehicle including the same.

. Meanwhile, another object of the present disclosure is to provide a signal processing device capable of stably outputting the sound corresponding to the image even though the number of virtual machines is increased, and a display apparatus for vehicle including the same.

. Meanwhile, yet another object of the present disclosure is to provide a signal processing device capable of stably outputting the sound corresponding to the image even though operating systems of a plurality of virtual machines are different from each other, and a display apparatus for vehicle including the same.

. In accordance with an aspect of the present disclosure, the above and other objects can be accomplished by the provision of a signal processing device including a processor configured to perform signal processing for a display mounted on a vehicle, in which the processor is configured to execute a hypervisor and execute first to third virtual machines on the hypervisor, the second virtual machine is configured to operate for a first display and the third virtual machine is configured to operate for a second display, the first virtual machine or the hypervisor is configured to execute a display manager to control an image displayed on the first display or the second display and an audio manager to control a sound corresponding to the image displayed on the first display or the second display, and the audio manager is configured to allocate corresponding audio signals to a plurality of speakers in a vehicle, respectively.

. Meanwhile, the audio manager may be configured to allocate a first audio signal to a first speaker in response to displaying a first image on the first display, and allocate a second audio signal to a second speaker in response to displaying a second image on the second display.

. Meanwhile, the audio manager may be configured to allocate the first audio signal in which noise canceling is not performed to the first speaker, and allocate the second audio signal in which the noise canceling is performed to the second speaker.

. Meanwhile, the audio manager may be configured to allocate an audio signal in which the noise canceling is not performed to some of the plurality of speakers, and allocate an audio signal in which the noise canceling is performed to some other speakers.

. Meanwhile, the audio manager may be configured to allocate an audio signal including safety driving information to some of the plurality of speakers, and allocate an audio signal not including the safety driving information to some other speakers.

. Meanwhile, the audio manager may be configured to allocate a first audio signal to a first speaker in response to displaying a first image on the first display, allocate a second audio signal to a second speaker in response to displaying a second image on the second display, and allocate a third audio signal to a third speaker in response to displaying a third image on a third display.

. Meanwhile, the audio manager may be configured to allocate the second audio signal to the second speaker and allocate the third audio signal to the second speaker in response to the third image being displayed on the second display and the second image being displayed on the third display.

. Meanwhile, the audio manager may be configured to allocate a first audio signal corresponding to the second image to the second speaker in response to displaying the first image on the first display and displaying the second image on the second display, and allocate a second audio signal corresponding to a third image to a third speaker in response to displaying the third image on a third display.

. Meanwhile, the audio manager may be configured to allocate the first audio signal to the third speaker and allocate the second audio signal to the second speaker in response to the third image being displayed on the second display and the second image being displayed on the third display.

. Meanwhile, the audio manager may be configured to set a shared memory based on the hypervisor for transmission of the same audio signal to the second virtual machine and the third virtual machine.

. Meanwhile, the audio manager may be configured to transmit first audio data to the shared memory based on the hypervisor, and the second virtual machine and the third virtual machine may be configured to receive the first audio data in the shared memory to output the same sound from speakers managed, respectively.

. Meanwhile, the second virtual machine and the third virtual machine may be executed by different operating systems.

. Meanwhile, the audio manager may be configured to integratedly manage an audio signal in the second virtual machine and an audio signal in the third virtual machine, or control an audio focus.

. Meanwhile, the first virtual machine or the hypervisor may be configured to further execute an audio server to determine an output path of an audio signal.

. Meanwhile, the hypervisor may be configured to transmit a graphic signal to a graphic processor, transmit an overlay signal to an overlay processor, or transmit an audio signal to an audio processor.

. Meanwhile, the first virtual machine or the hypervisor may be configured to further execute a window manager to set a position and an attribute of a window based on window information loaded upon booting.

. In accordance with another aspect of the present disclosure, the above and other objects can be accomplished by the provision of a display apparatus for vehicle including the signal processing device, which includes a processor configured to perform signal processing for a display mounted on a vehicle, in which the processor is configured to execute a hypervisor, the hypervisor is configured to execute a display manager to control an image displayed on a first display or a second display and an audio manager to control a sound corresponding to the image displayed on the first display or the second display, and the audio manager is configured to allocate corresponding audio signals to a plurality of speakers in a vehicle, respectively.

. Meanwhile, the audio manager may be configured to allocate an audio signal in which the noise canceling is not performed to some of the plurality of speakers, and allocate an audio signal in which the noise canceling is performed to some other speakers.

. Meanwhile, the audio manager may be configured to allocate an audio signal including safety driving information to some of the plurality of speakers, and allocate an audio signal not including the safety driving information to some other speakers.

. Meanwhile, the audio manager may be configured to transmit first audio data to the shared memory based on the hypervisor, and a plurality of virtual machines executed by the processor may be configured to receive the first audio data in the shared memory to output the same sound from speakers managed, respectively.

. Meanwhile, the plurality of virtual machines may be executed by different operating systems.

. Meanwhile, the audio manager may be configured to integratedly manage respective audio signals in the plurality of virtual machines, or control an audio focus.

### EFFECTS OF THE DISCLOSURE

. According to an embodiment of the present disclosure, a signal processing device includes a processor configured to perform signal processing for a display mounted on a vehicle, in which the processor is configured to execute a hypervisor and execute first to third virtual machines on the hypervisor, the second virtual machine is configured to operate for a first display, the third virtual machine is configured to operate for a second display, the first virtual machine or the hypervisor is configured to execute a display manager to control an image displayed on the first display or the second display and an audio manager to control a sound corresponding to the image displayed on the first display or the second display, and the audio manager is configured to allocate corresponding audio signals to a plurality of speakers in a vehicle, respectively. Accordingly, it is possible to stably output a sound corresponding to the image. In particular, even though the number of virtual machines is increased, it is possible to stably output the sound corresponding to the image.

. Meanwhile, the audio manager may be configured to allocate a first audio signal to a first speaker in response to displaying a first image on the first display, and allocate a second audio signal to a second speaker in response to displaying a second image on the second display. Accordingly, it is possible to stably output the sound corresponding to the image.

. Meanwhile, the audio manager may be configured to allocate the first audio signal in which noise canceling is not performed to the first speaker and allocate the second audio signal in which the noise canceling is performed to the second speaker. Accordingly, it is possible to stably output the sound corresponding to the image.

. Meanwhile, the audio manager may be configured to allocate an audio signal in which the noise canceling is not performed to some of the plurality of speakers and allocate an audio signal in which the noise canceling is performed to some other speakers. Accordingly, it is possible to stably output the sound corresponding to the image.

. Meanwhile, the audio manager may be configured to allocate an audio signal including safety driving information to some of the plurality of speakers and allocate an audio signal not including the safety driving information to some other speakers. Accordingly, it is possible to stably output the sound corresponding to the image.

. Meanwhile, the audio manager may be configured to allocate a first audio signal to a first speaker in response to displaying a first image on the first display, allocate a second audio signal to a second speaker in response to displaying a second image on the second display, and allocate a third audio signal to a third speaker in response to displaying a third image on a third display. Accordingly, it is possible to stably output the sound corresponding to the image.

. Meanwhile, the audio manager may be configured to allocate the second audio signal to the second speaker and allocate the third audio signal to the second speaker in response to the third image being displayed on the second display and the second image being displayed on the third display. Accordingly, it is possible to stably output the sound corresponding to the image.

. Meanwhile, the audio manager may be configured to allocate a first audio signal corresponding to the second image to the second speaker in response to displaying the first image on the first display and displaying the second image on the second display, and allocate a second audio signal corresponding to a third image to a third speaker in response to displaying the third image on a third display. Accordingly, it is possible to stably output the sound corresponding to the image.

. Meanwhile, the audio manager may be configured to allocate the first audio signal to the third speaker and allocate the second audio signal to the second speaker in response to the third image being displayed on the second display and the second image being displayed on the third display. Accordingly, it is possible to stably output the sound corresponding to the image.

. Meanwhile, the audio manager may be configured to set a shared memory based on the hypervisor for transmission of the same audio signal to the second virtual machine and the third virtual machine. Accordingly, it is possible to stably output the sound corresponding to the image.

. Meanwhile, the audio manager may be configured to transmit first audio data to the shared memory based on the hypervisor, and the second virtual machine and the third virtual machine may be configured to receive the first audio data in the shared memory to output the same sound from speakers managed, respectively. Accordingly, it is possible to stably output the sound corresponding to the image.

. Meanwhile, the second virtual machine and the third virtual machine may be executed by different operating systems. Accordingly, even though operating systems of a plurality of virtual machines are different from each other, it is possible to stably output the sound corresponding to the image.

. Meanwhile, the audio manager may be configured to integratedly manage an audio signal in the second virtual machine and an audio signal in the third virtual machine, or control an audio focus. Accordingly, even though operating systems of a plurality of virtual machines are different from each other, it is possible to stably output the sound corresponding to the image.

. Meanwhile, the first virtual machine or the hypervisor may be configured to further execute an audio server to determine an output path of an audio signal. Accordingly, it is possible to stably output the sound corresponding to the image.

. Meanwhile, the hypervisor may be configured to transmit a graphic signal to a graphic processor, transmit an overlay signal to an overlay processor, or transmit an audio signal to an audio processor. Accordingly, it is possible to stably output the sound corresponding to the image.

. Meanwhile, the first virtual machine or the hypervisor may be configured to further execute a window manager to set a position and an attribute of a window based on window information loaded upon booting. Accordingly, it is possible to stably output the sound corresponding to the image.

. According to another exemplary embodiment of the present disclosure, a display apparatus for vehicle including the signal processing device includes a processor configured to perform signal processing for a display mounted on a vehicle, in which the processor is configured to execute a hypervisor, the hypervisor is configured to execute a display manager to control an image displayed on a first display or a second display, and an audio manager to control a sound corresponding to the image displayed on the first display or the second display, and the audio manager is configured to allocate corresponding audio signals to a plurality of speakers in a vehicle, respectively. Accordingly, it is possible to stably output the sound corresponding to the image. In particular, even though the number of virtual machines is increased, it is possible to stably output the sound corresponding to the image.

. Meanwhile, the audio manager may be configured to allocate an audio signal in which the noise canceling is not performed to some of the plurality of speakers, and allocate an audio signal in which the noise canceling is performed to some other speakers. Accordingly, it is possible to stably output the sound corresponding to the image.

. Meanwhile, the audio manager may be configured to allocate an audio signal including safety driving information to some of the plurality of speakers and allocate an audio signal not including the safety driving information to some other speakers. Accordingly, it is possible to stably output the sound corresponding to the image.

. Meanwhile, the audio manager may be configured to transmit first audio data to the shared memory based on the hypervisor, and a plurality of virtual machines executed by the processor may be configured to receive the first audio data in the shared memory to output the same sound from speakers managed, respectively. Accordingly, it is possible to stably output the sound corresponding to the image.

. Meanwhile, the plurality of virtual machines may be executed by different operating systems. Accordingly, even though operating systems of a plurality of virtual machines are different from each other, it is possible to stably output the sound corresponding to the image.

. Meanwhile, the audio manager may be configured to integratedly manage respective audio signals in the plurality of virtual machines, or control an audio focus. Accordingly, it is possible to stably output the sound corresponding to the image.

### BRIEF DESCRIPTION OF THE DRAWINGS

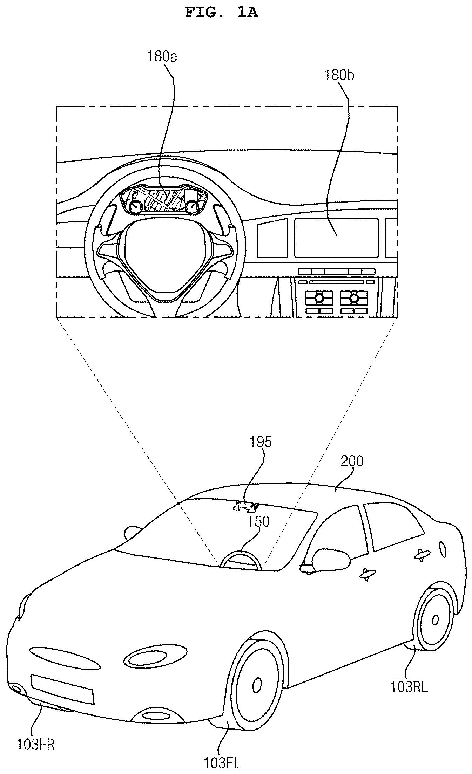

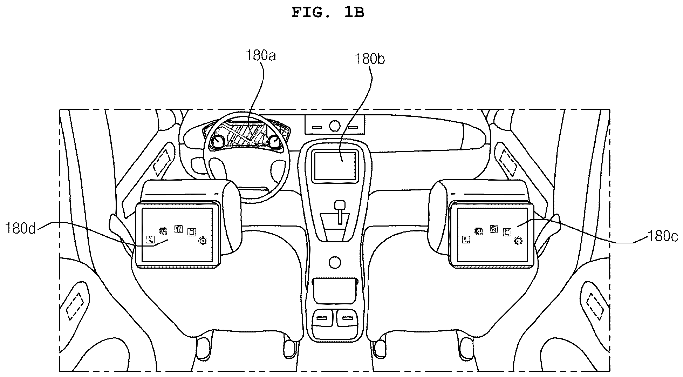

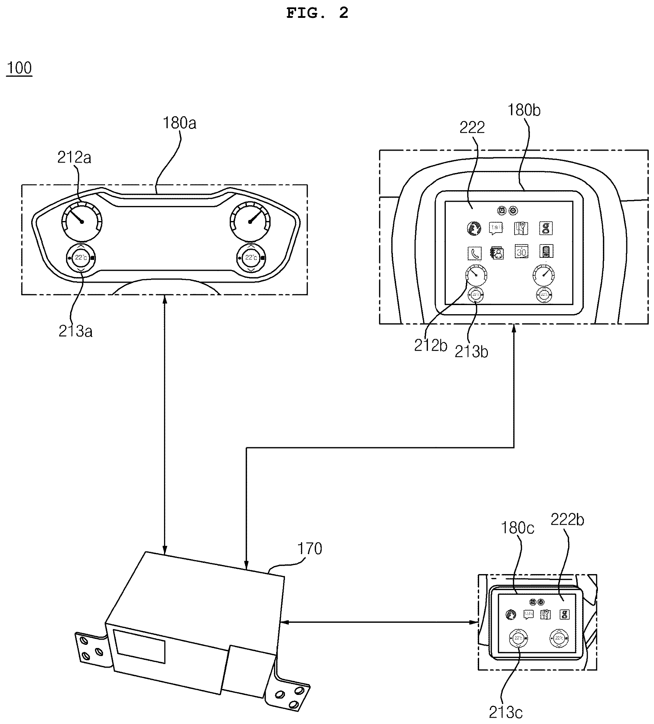

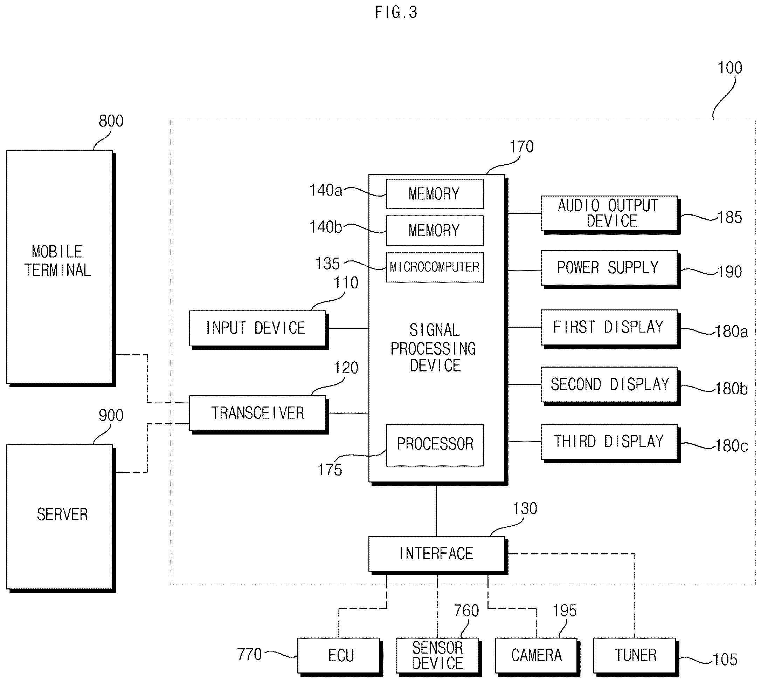

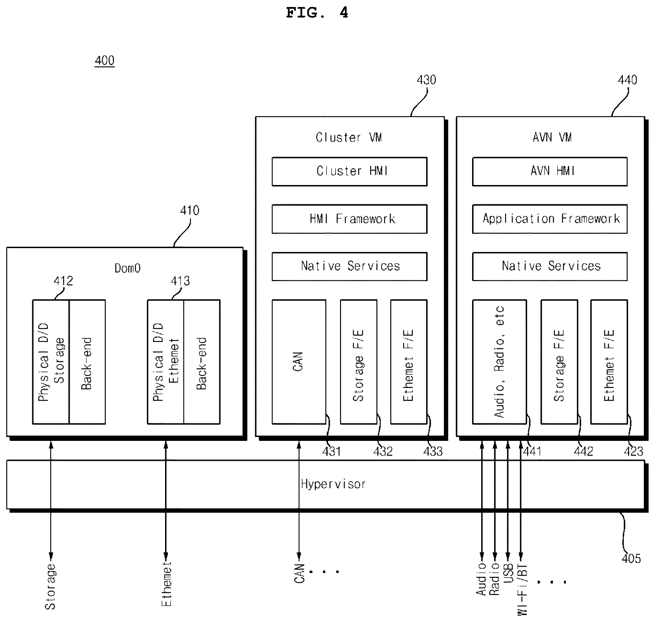

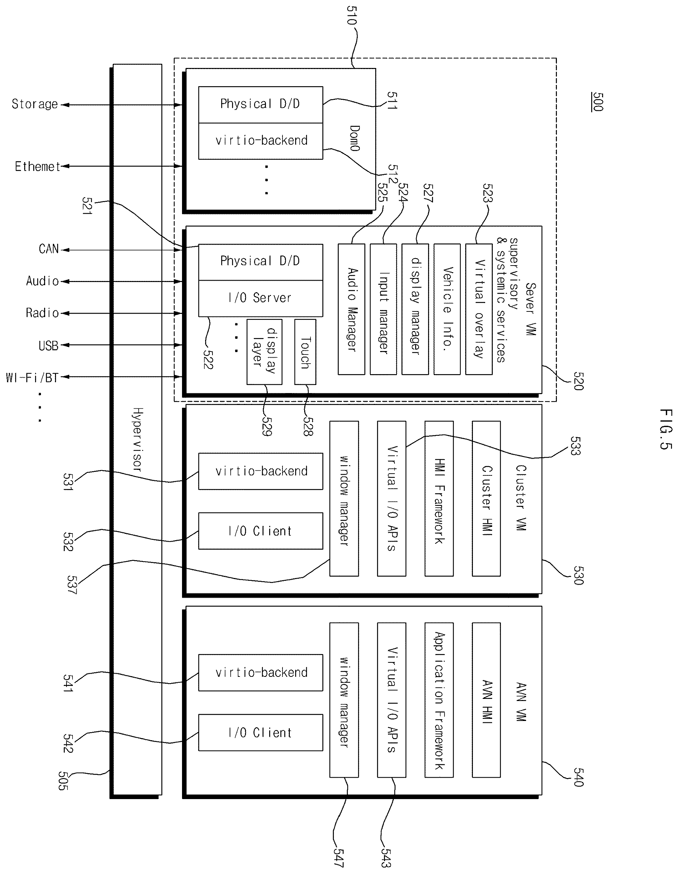

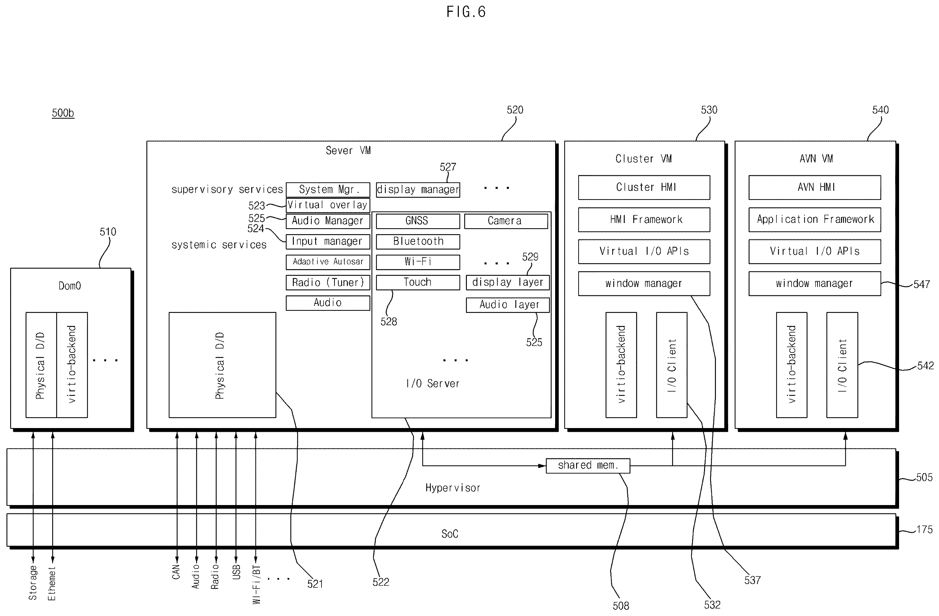

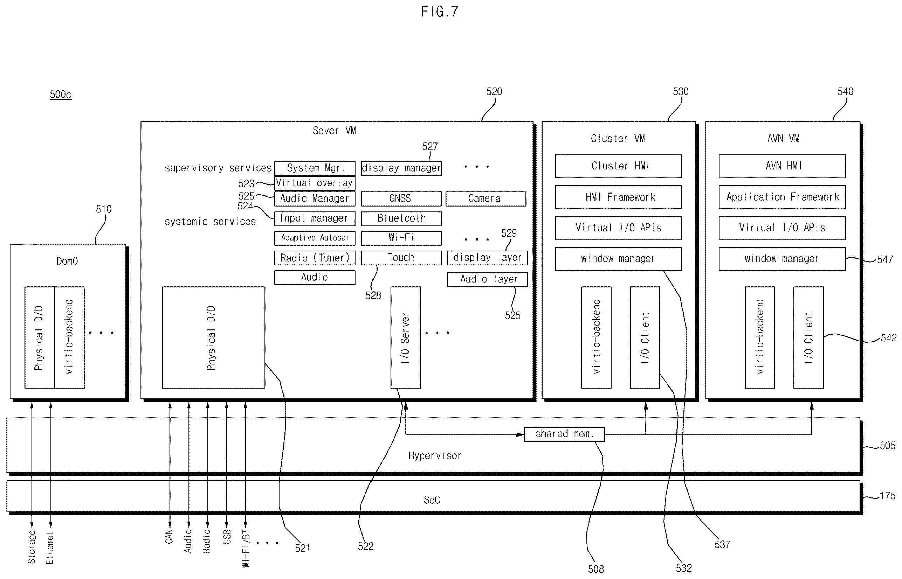

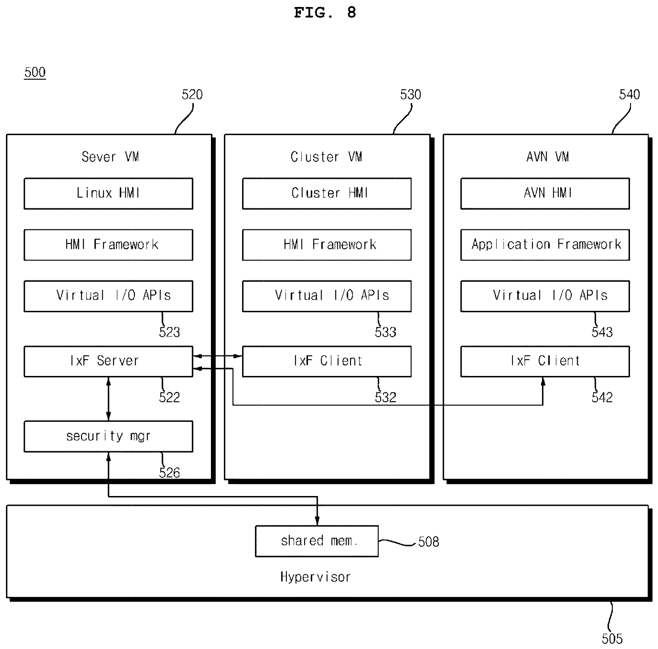

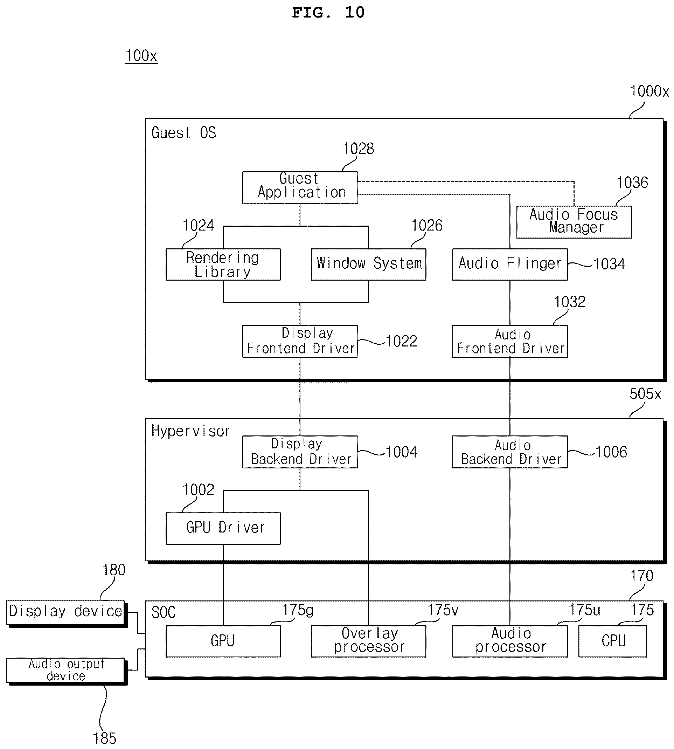

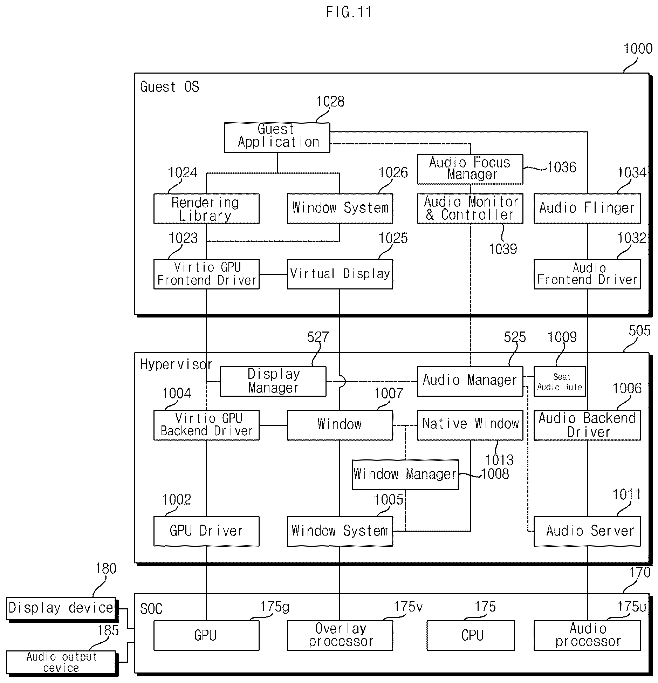

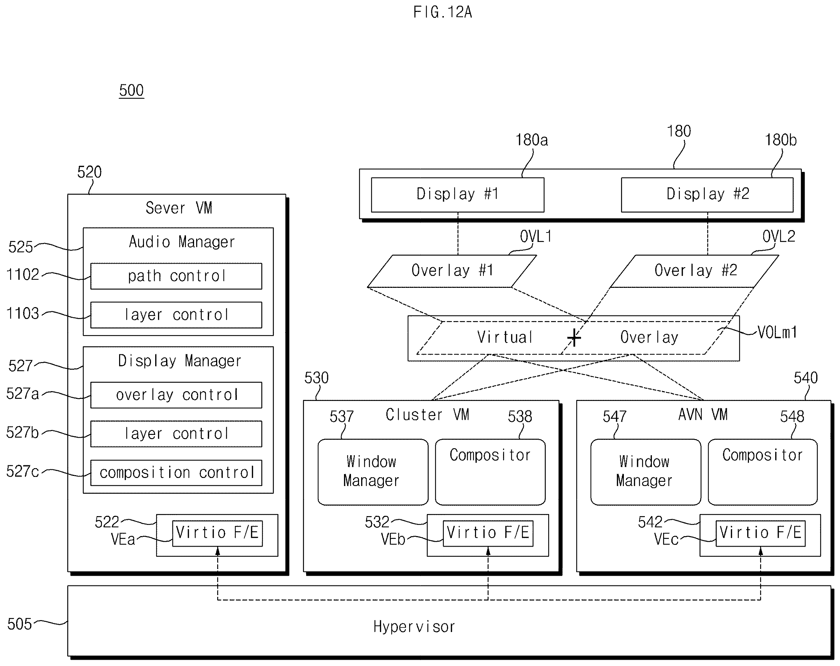

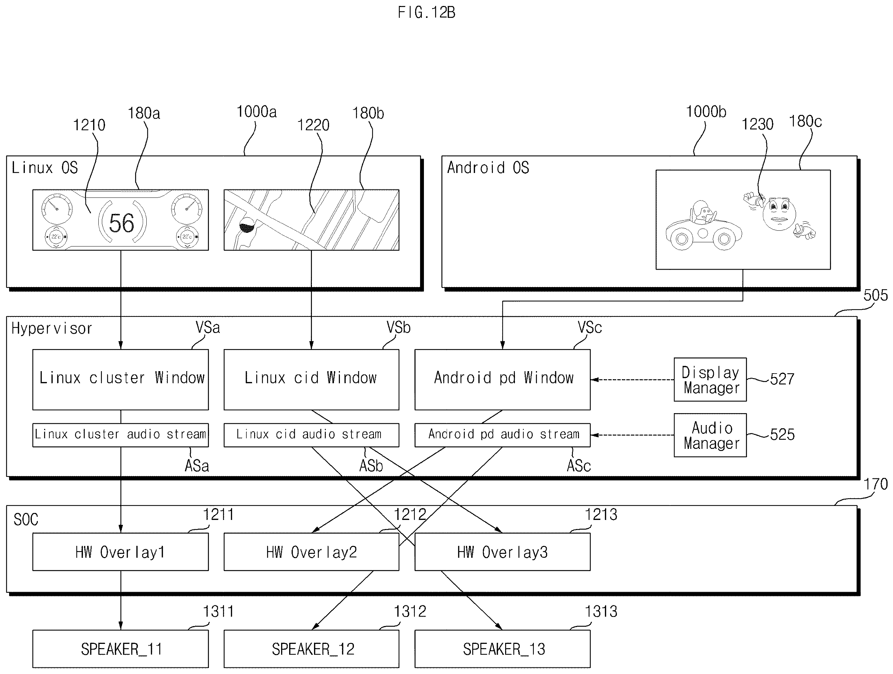

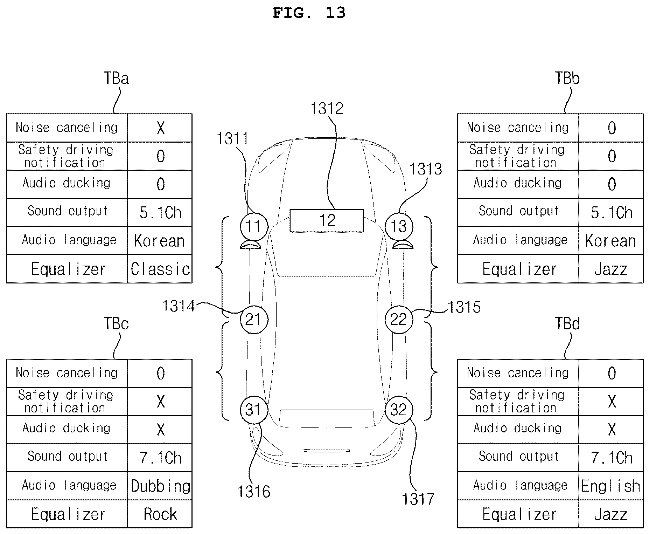

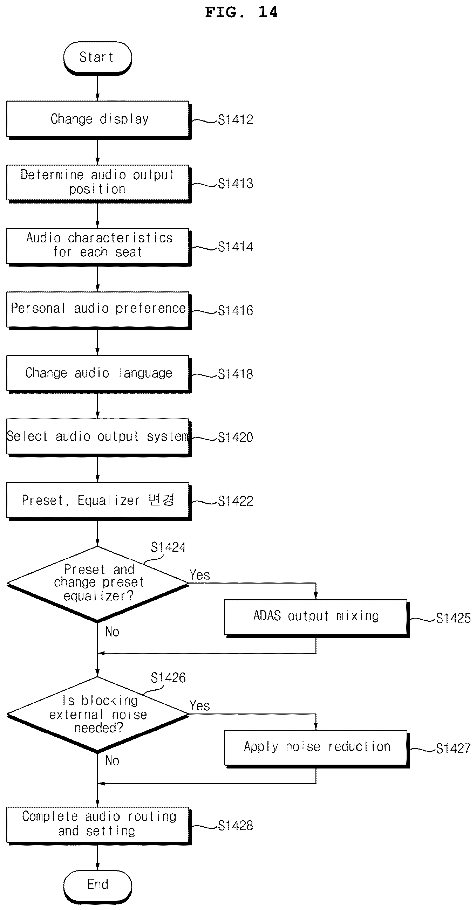

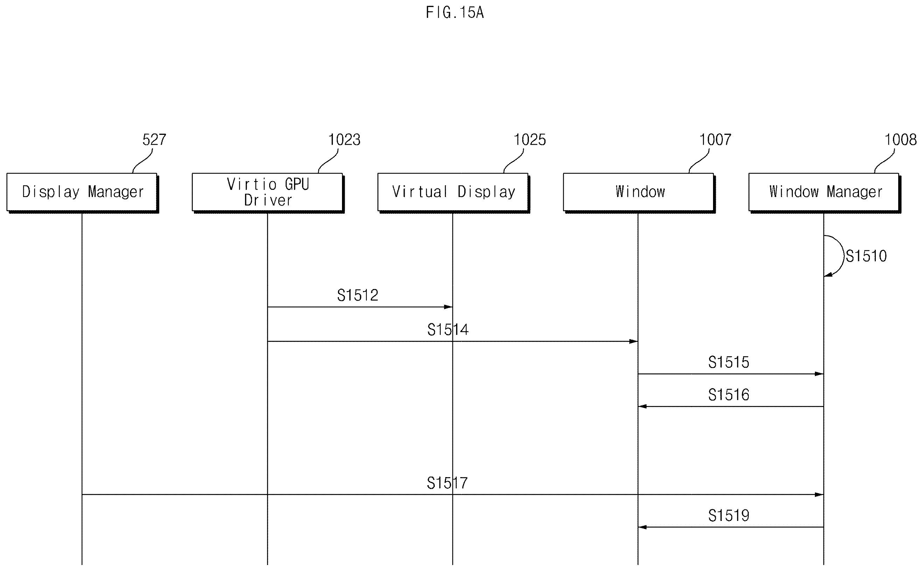

. FIG. 1A is a view showing an example of the exterior and interior of a vehicle;
. FIG. 1B is a view showing another example of the interior of the vehicle;
. FIG. 2 is a view showing the external appearance of a display apparatus for vehicle according to an embodiment of the present disclosure;
. FIG. 3 illustrates an example of an internal block diagram of the display apparatus for vehicle of FIG. 2;
. FIG. 4 is a view showing a system driven in a signal processing device related to the present disclosure;
. FIG. 5 is a view showing an example of a system driven in a signal processing device according to an embodiment of the present disclosure;
. FIG. 6 is a view showing another example of the system driven in the signal processing device according to the embodiment of the present disclosure;
. FIG. 7 is a view showing a further example of the system driven in the signal processing device according to the embodiment of the present disclosure;
. FIGS. 8 to 9B are views referred to in the description of FIG. 5;
. FIG. 10 shows an example of an internal circuit diagram of a display apparatus for vehicle according to the present disclosure;
. FIG. 11 shows an example of an internal block diagram of a display apparatus for vehicle according to an embodiment of the present disclosure;
. FIG. 12A is a view describing an example of display of an overlay in a system driven in the signal processing device according to an embodiment of the present disclosure;
. FIG. 12B is a view describing an example of overlay display and audio output in the system driven in the signal processing device according to an embodiment of the present disclosure;
. FIG. 13 is a view showing a plurality of speakers in a vehicle;
. FIG. 14 shows an example of an operating method of a signal processing device according to an embodiment of the present disclosure; and
. FIGS. 15A to 19 are views referred to in the description of FIG. 14.

### DETAILED DESCRIPTION OF THE PREFERRED EMBODIMENTS

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1A is a view showing an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be further provided therein with a plurality of displays 180a and 180b configured to display images and information.

. In FIG. 1A, a cluster display 180a and an audio video navigation (AVN) display 180b are illustrated as the plurality of displays 180a and 180b. In addition, a head up display (HUD) may also be used.

. Meanwhile, the audio video navigation (AVN) display 180b may also be called a center information display.

. The embodiment of the present disclosure provides a method in which in the display apparatus 100 for vehicle including the plurality of displays 180a and 180, image signal processing and audio signal processing are efficiently performed to output a stable image and sound. This is described with reference to FIG. 11 or below.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIG. 1B is a view showing another example of the interior of the vehicle.

. Referring to the figure, a cluster display 180a, an audio video navigation (AVN) display 180b, rear seat entertainment displays 180c and 180d, and a rear-view mirror display (not shown) may be mounted in the vehicle.

. The embodiment of the present disclosure provides a method in which in the display apparatus 100 for vehicle including the plurality of displays 180a to 180d, the sound corresponding to the image may be stably output. This is described with reference to FIG. 5 or below.

. FIG. 2 is a view showing the external appearance of a display apparatus for vehicle according to an embodiment of the present disclosure.

. The display apparatus 100 for vehicle according to the embodiment of the present disclosure may include a plurality of displays 180a and 180b and a signal processing device 170 configured to perform signal processing to display images and information on the plurality of displays 180a and 180b.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The signal processing device 170 may have a processor 175 provided therein, and first to third virtual machines 520 to 540 may be executed by a hypervisor 505 in the processor 175.

. The second virtual machine 530 may be operated for the first display 180a, and the third virtual machine 540 may be operated for the second display 180b.

. Meanwhile, the first virtual machine 520 in the processor 175 may be configured to set a shared memory 508 based on the hypervisor 505 for transmission of the same data to the second virtual machine 530 and the third virtual machine 540. Consequently, the first display 180a and the second display 180b in the vehicle may be configured to display the same information or the same images in a synchronized state.

. Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

. Meanwhile, the first virtual machine 520 in the processor 175 may be configured to receive and process wheel speed sensor data of the vehicle, and may be configured to transmit the processed wheel speed sensor data to at least one of the second virtual machine 530 or the third virtual machine 540. Consequently, at least one virtual machine may share the wheel speed sensor data of the vehicle.

. Meanwhile, the display apparatus 100 for vehicle according to the embodiment of the present disclosure may further include a rear seat entertainment (RSE) display 180c configured to display driving state information, simple navigation information, various kinds of entertainment information, or an image.

. The signal processing device 170 may be configured to further execute a fourth virtual machine (not shown), in addition to the first to third virtual machines 520 to 540, on the hypervisor 505 in the processor 175 to control the RSE display 180c.

. Consequently, it is possible to control various displays 180a to 180c using a single signal processing device 170.

. Meanwhile, some of the plurality of displays 180a to 180c may be operated based on a Linux Operating System (OS), and others may be operated based on a Web Operating System (OS).

. In response to touch being input to any one of the displays 180a and 180b or 180a to 180c configured to be operated under various operating systems, the signal processing device 170 according to the embodiment of the present disclosure may be configured to rapidly and accurately process the touch input.

. Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

. FIG. 3 illustrates an example of an internal block diagram of the display apparatus for vehicle according to the embodiment of the present disclosure.

. Referring to the figure, the display apparatus 100 for vehicle according to the embodiment of the present disclosure may include an input device 110, a transceiver 120, an interface 130, a memory 140, a signal processing device 170, a plurality of displays 180a to 180c, an audio output device 185, and a power supply 190.

. The input device 110 may include a physical button or pad for button input or touch input.

. Meanwhile, the input device 110 may include a touch sensor (not shown) configured to sense touch input to the displays 180a, 180b, and 180c.

. Meanwhile, the input device 110 may include a microphone (not shown) for user voice input.

. The transceiver 120 may wirelessly exchange data with a mobile terminal 800 or a server 900.

. In particular, the transceiver 120 may wirelessly exchange data with a mobile terminal of a vehicle driver. Any of various data communication schemes, such as Bluetooth, Wi-Fi, WIFI Direct, and APIX, may be used as a wireless data communication scheme.

. The transceiver 120 may be configured to receive weather information and road traffic situation information, such as transport protocol expert group (TPEG) information, from the mobile terminal 800 or the server 900. To this end, the transceiver 120 may include a mobile communication module (not shown).

. The interface 130 may be configured to receive sensor information from an electronic control unit (ECU) 770 or a sensor device 760, and may be configured to transmit the received information to the signal processing device 170.

. Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

. The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

. Meanwhile, the interface 130 may be configured to receive front-of-vehicle image data, side-of-vehicle image data, rear-of-vehicle image data, and obstacle-around-vehicle distance information from a camera 195 or lidar (not shown), and may be configured to transmit the received information to the signal processing device 170.

. The memory 140 may store various data necessary for overall operation of the display apparatus 100 for vehicle, such as programs for processing or control of the signal processing device 170.

. For example, the memory 140 may store data about the hypervisor and first to third virtual machines executed by the hypervisor in the processor 175.

. The audio output device 185 may convert an electrical signal from the signal processing device 170 into an audio signal, and may output the audio signal. To this end, the audio output device 185 may include a speaker.

. The power supply 190 may supply power necessary to operate components under control of the signal processing device 170. In particular, the power supply 190 may be configured to receive power from a battery in the vehicle.

. The signal processing device 170 may control overall operation of each device in the display apparatus 100 for vehicle.

. For example, the signal processing device 170 may include a processor 175 configured to perform signal processing for the displays 180a and 180b.

. The processor 175 may be configured to execute the first to third virtual machines 520 to 540 on the hypervisor 505 (see FIG. 5) in the processor 175.

. Meanwhile, the processor 175 may be configured to further execute a legacy virtual machine configured to receive and process Ethernet data. For example, as shown in FIG. 5, the legacy virtual machine may be executed by the first virtual machine 520 in the processor 175.

. Among the first to third virtual machines 520 to 540 (see FIG. 5), the first virtual machine 520 may be called a server virtual machine, and the second and third virtual machines 530 and 540 may be called guest virtual machines.

. The second virtual machine 530 may be operated for the first display 180a, and the third virtual machine 540 may be operated for the second display 180b.

. For example, the first virtual machine 520 in the processor 175 may be configured to receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

. As another example, the first virtual machine 520 may directly receive and process CAN communication data, audio data, radio data, USB data, and wireless communication data for the second and third virtual machines 530 and 540.

. The first virtual machine 520 may be configured to transmit the processed data to the second and third virtual machines 530 and 540.

. Consequently, only the first virtual machine 520, among the first to third virtual machines 520 to 540, may be configured to receive communication data and external input data, and may be configured to perform signal processing, whereby load in signal processing by the other virtual machines may be reduced and 1:N data communication may be achieved, and therefore synchronization at the time of data sharing may be achieved.

. Meanwhile, the first virtual machine 520 writes some of data in a first shared memory (not shown) to be transmitted to the second virtual machine 530, and writes some other data in the first shared memory (not shown) to be transmitted to the third virtual machine. The second virtual machine 530 and the third virtual machine 540 are configured to process the received data, and write the processed data in a second shared memory (not shown). Accordingly, it is possible to stably output the sound corresponding to the image.

. At this time, data may be any one of image data, audio data, navigation data, and voice recognition data.

. Meanwhile, the first virtual machine 520 may process some other of data, and may be configured to write the processed data in the second shared memory (not shown). That is, the first virtual machine 520 may be configured to perform data processing in addition to the second virtual machine 530 and the third virtual machine 540.

. Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

. Meanwhile, the first virtual machine 520 may be configured to generate command queues for distributed processing of data in the second virtual machine 530 and the third virtual machine 540. Consequently, the plurality of virtual machines may divide and process data.

. Meanwhile, in response to the second virtual machine 530 and the third virtual machine 540 sharing the same data, the first virtual machine 520 in the processor 175 may be configured to generate one command queue. Consequently, the same data may be synchronized and shared.

. Meanwhile, the first virtual machine 520 may be configured to generate command queues corresponding to the number of virtual machines for distributed processing of data.

. Meanwhile, the first virtual machine 520 may be configured to transmit at least some of data to at least one of the second virtual machine 530 or the third virtual machine 540 for distributed processing of data.

. For example, the first virtual machine 520 may be configured to allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

. Meanwhile, the first virtual machine 520 may be configured to write data in the shared memory 508, whereby the second virtual machine 530 and the third virtual machine 540 share the same data.

. For example, the first virtual machine 520 may be configured to write radio data or wireless communication data in the shared memory 508, whereby the second virtual machine 530 and the third virtual machine 540 share the same data. Consequently, 1:N data sharing may be achieved.

. Eventually, the first virtual machine 520 may process most of the data, whereby 1:N data sharing may be achieved.

. Meanwhile, the first virtual machine 520 in the processor 175 may be configured to set the shared memory 508 based on the hypervisor 505 to transmit the same data to the second virtual machine 530 and the third virtual machine 540.

. That is, the first virtual machine 520 in the processor 175 may be configured to transmit the same data to the second virtual machine 530 and the third virtual machine 540 in a synchronized state using the shared memory 508 based on the hypervisor 505. Consequently, the plurality of displays 180a and 180b in the vehicle may be configured to display the same images in a synchronized state.

. Meanwhile, the signal processing device 170 may process various signals, such as an audio signal, an image signal, and a data signal. To this end, the signal processing device 170 may be implemented in the form of a system on chip (SOC).

. FIG. 4 is a view showing a system driven in a signal processing device related to the present disclosure.

. Referring to the figure, FIG. 4 is a view illustrating that virtual machines are used for the cluster display 180a and the AVN display 180b.

. The system 400 driven in the signal processing device of FIG. 4 illustrates that a cluster virtual machine 430 and an AVN virtual machine 440 are executed through a hypervisor 405 in the processor 175.

. Meanwhile, the system 400 driven in the signal processing device of FIG. 4 illustrates that a legacy virtual machine 410 is also executed on the hypervisor 405 in the processor 175.

. The legacy virtual machine 410 may include an interface 412 for data communication with the memory 140 and an interface 413 for Ethernet communication.

. Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

. Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

. In the system 400, there is a disadvantage in that CAN communication data are input and output only in the cluster virtual machine 430, whereby the CAN communication data cannot be utilized in the AVN virtual machine 440.

. Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

. Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

. Therefore, the present disclosure proposes a scheme for improving the system of FIG. 4. That is, unlike FIG. 4, virtual machines are classified into a server virtual machine and guest virtual machines such that various memory data and communication data are input and output not in the guest virtual machines but in the server virtual machine. This will be described with reference to FIG. 5 and subsequent figures.

. FIG. 5 is a view showing an example of a system driven in a signal processing device according to an embodiment of the present disclosure.

. Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

. The second virtual machine 530 may be a virtual machine for the cluster display 180a, and the third virtual machine 540 may be a virtual machine for the AVN display 180b.

. That is, the second virtual machine 530 and the third virtual machine 540 may be operated for image rendering of the cluster display 180a and the AVN display 180b, respectively.

. Meanwhile, the system 50 driven in the signal processing device 170 of FIG. 5 illustrates that a legacy virtual machine 510 is also executed on the hypervisor 505 in the processor 175.

. The legacy virtual machine 510 may include an interface 511 for data communication with the memory 140 and Ethernet communication.

. The figure illustrates that the interface 511 is a physical device driver; however, various modifications are possible.

. Meanwhile, the legacy virtual machine 510 may further include a virtio-backend interface 512 for data communication with the second and third virtual machines 530 and 540.

. The first virtual machine 520 may include an interface 521 for input and output of audio data, radio data, USB data, and wireless communication data and an input and output server interface 522 for data communication with the guest virtual machines.

. That is, the first virtual machine 520, which is a server virtual machine, may be configured to provide inputs/outputs (I/O) difficult to virtualize with standard virtualization technology (VirtIO) to a plurality of guest virtual machines, such as the second and third virtual machines 530 and 540.

. Meanwhile, the first virtual machine 520, which is a server virtual machine, may control radio data and audio data at a supervisor level, and may be configured to provide the data to a plurality of guest virtual machines, such as the second and third virtual machines 530 and 540.

. Meanwhile, the first virtual machine 520, which is a server virtual machine, may process vehicle data, sensor data, and surroundings-of-vehicle information, and may be configured to provide the processed data or information to a plurality of guest virtual machines, such as the second and third virtual machines 530 and 540.

. Meanwhile, the first virtual machine 520 may be configured to provide supervisory services, such as processing of vehicle data and audio routing management.

. Next, the second virtual machine 530 may include an input and output client interface 532 for data communication with the first virtual machine 520 and APIs 533 configured to control the input and output client interface 532.

. In addition, the second virtual machine 530 may include a virtio-backend interface for data communication with the legacy virtual machine 510.

. The second virtual machine 530 may be configured to receive memory data by communication with the memory 140 or Ethernet data by Ethernet communication from the virtio-backend interface 512 of the legacy virtual machine 510 through the virtio-backend interface.

. Next, the third virtual machine 540 may include an input and output client interface 542 for data communication with the first virtual machine 520 and APIs 543 configured to control the input and output client interface 542.

. In addition, the third virtual machine 540 may include a virtio-backend interface for data communication with the legacy virtual machine 510.

. The third virtual machine 540 may be configured to receive memory data by communication with the memory 140 or Ethernet data by Ethernet communication from the virtio-backend interface 512 of the legacy virtual machine 510 through the virtio-backend interface.

. Meanwhile, the legacy virtual machine 510 may be provided in the first virtual machine 520, unlike FIG. 5.

. In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

. Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

. Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

. Consequently, the touch input may be rapidly and accurately processed. In addition, the touch input may be rapidly and accurately processed even though the number of virtual machines that are driven is increased.

. Meanwhile, in the system 500 of FIG. 5, the second and third virtual machines 530 and 540 may be operated based on different operating systems.

. For example, the second virtual machine 530 may be operated based on a Linux OS, and the third virtual machine 540 may be operated based on a Web OS.

. In the first virtual machine 520, the shared memory 508 based on the hypervisor 505 is set for data sharing, even though the second and third virtual machines 530 and 540 are operated based on different operating systems.

. Even though the second and third virtual machines 530 and 540 are operated based on different operating systems, therefore, the same data or the same images may be shared in a synchronized state. Eventually, the plurality of displays 180a and 180b may be configured to display the same data or the same images in a synchronized state.

. Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

. Meanwhile, the first virtual machine 520 may be configured to execute a display manager 527 for controlling the images or overlays displayed on the first display 180a and the second display 180b through the second and third virtual machines 530 and 540.

. Meanwhile, the first virtual machine 520 may be configured to execute a display layer server 529, and a virtual overlay creator 523 generating a virtual overlay.

. The display layer server 529 may be configured to receive a first overlay provided by the second virtual machine 530 and a second overlay provided by the third virtual machine 540.

. Meanwhile, the display layer server 529 may be configured to transmit a virtual overlay generated by the virtual overlay creator 523 to at least one of the second virtual machine 530 or the third virtual machine 540.

. Meanwhile, the display manager 527 in the first virtual machine 520 may be configured to receive the first overlay provided by the second virtual machine 530 and the second overlay provided by the third virtual machine 540 through the display layer server 529.

. The display manager 527 in the first virtual machine 520 may be configured to transmit the virtual overlay, which is different from the first overlay or the second overlay, to at least one of the second virtual machine 530 or the third virtual machine 540 through the display layer server 529.

. In response thereto, the second virtual machine 530 may be configured to combine and display he first overlay and the virtual overlay on the first display 180a.

. In addition, the third virtual machine 540 may be configured to combine and display the second overlay and the virtual overlay on the second display 180b.

. Meanwhile, the first virtual machine 520 may include an input manager 524 configured to receive an input signal from the outside. At this time, the input signal may be an input signal from a predetermined button (start button) in the vehicle, a touch input signal, or a voice input signal.

. For example, the input manager 524 in the first virtual machine 520 may be configured to receive touch input from the first display 180a or the second display 180b.

. Meanwhile, the first virtual machine 520 may include a touch server 528 configured to transmit information regarding the touch input related to the touch input from the first display 180a or the second display 180b to the second virtual machine 530 or the third virtual machine 540.

. For example, when there is touch input corresponding to the first display 180a, the touch server 528 in the first virtual machine 520 may be configured to transmit information regarding the touch input to the second virtual machine 530.

. Meanwhile, the touch server 528 in the first virtual machine 520 may be configured to receive the touch input from the first display 180a or the second display 180b.

. Meanwhile, the first virtual machine 520 may be configured to execute an audio manager 525 for controlling the sound corresponding to the image displayed in the first display 180a or the second display 180b.

. For example, the audio manager 525 may be configured to process an audio signal corresponding to the image displayed in the image displayed in the first display 180a or the second display 180b.

. Meanwhile, the audio manager 525 is configured to allocate corresponding audio signals to a plurality of speakers in the vehicle, respectively. Accordingly, it is possible to stably output the sound corresponding to the image.

. Meanwhile, the audio manager 525 may be configured to allocate a first audio signal to a first speaker in response to displaying a first image on the first display 180a and allocate a second audio signal to a second speaker in response to displaying a second image on the second display 180b. Accordingly, it is possible to stably output the sound corresponding to the image.

. FIG. 6 is a view showing another example of the system driven in the signal processing device according to the embodiment of the present disclosure.

. Referring to the figure, in the system 500b driven by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set the shared memory 508 based on the hypervisor 505 for transmission of data to the second and third virtual machines 530 and 540.

. For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are driven is increased.

. As another example, image data may be illustrated as the data. Consequently, an image may be displayed on the first display 180a or the second display 180b.

. Meanwhile, in response to the same image data being shared in the shared memory 508, the plurality of displays 180a and 180b in the vehicle may be configured to display the same data in a synchronized state.

. As another example, CAN communication data, audio data, radio data, USB data, wireless communication data, or position information data may be illustrated as the data. Consequently, information regarding the data may be displayed on the first display 180a or the second display 180b.

. Meanwhile, although not shown in FIG. 6, the legacy virtual machine 510 may be configured to transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

. Meanwhile, the first virtual machine 520 in the system 500b of FIG. 6 may include a display manager 527, a display layer server 529, a virtual overlay creator 523, an input manager 524, and a touch server 528, similarly to the first virtual machine 520 in the system 500 of FIG. 5.

. Meanwhile, the input and output server interface 522 in the first virtual machine 520 in the system 500b of FIG. 6 may include a display layer server 529 and a touch server 528, unlike FIG. 5.

. The operations of the display manager 527, the display layer server 529, the input manager 524, the virtual overlay creator 523, the touch server 528, and the audio manager 525 are the same as those in FIG. 5, and therefore, a description thereof will be omitted.

. Meanwhile, the first virtual machine 520 in FIG. 6 may further include a system manager to control an entire system, vehicle information manager for managing vehicle information, a radio manager to control a radio, etc.

. Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

. FIG. 7 is a view showing a further example of the system driven in the signal processing device according to the embodiment of the present disclosure.

. Referring to the figure, the system 500c driven by the processor 175 in the signal processing device of FIG. 7 is similar to the system 500b of FIG. 6.

. That is, like FIG. 6, the processor 175 of FIG. 7 executes the first to third virtual machines 520 to 540 on the hypervisor 505 in the processor 175.

. In FIG. 7, however, the display layer server 529 and the touch server 528 may be provided and executed in the first virtual machine 520 outside the input and output server interface 522, unlike FIG. 6.

. In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

. That is, the display manager 527, the display layer server 529, the virtual overlay creator 523, the input manager 524, and the touch server 528 may be provided and executed in the first virtual machine 520.

. The operations of the display manager 527, the display layer server 529, the virtual overlay creator 523, the input manager 524, the touch server 528, and the audio manager 525 are the same as those in FIG. 5, and therefore, a description thereof will be omitted.

. FIGS. 8 to 9B are views referred to in the description of FIG. 5.

. First, FIG. 8 illustrates that the first to third virtual machines 520 to 540 are executed on the hypervisor 505 in the processor 175 of the system 500 according to the present disclosure and that the first virtual machine 520 in the processor 175 is configured to set the shared memory 508 based on the hypervisor 505 to transmit the same data to the second virtual machine 530 and the third virtual machine 540.

. Consequently, the first display 180a and the second display 180b in the vehicle may be configured to display the same images in a synchronized state.

. Meanwhile, high-speed data communication may be performed between the plurality of virtual machines. Furthermore, high-speed data communication may be performed even though the plurality of virtual machines is executed by different operating systems.

. Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

. Meanwhile, the first virtual machine 520 in the processor 175 may include an input and output server interface 522 and a security manager 526.

. Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

. The input and output server interface 522 in the first virtual machine 520 may be configured to receive requests for transmission of the same data from the input and output client interfaces 532 and 542 in the second virtual machine 530 and the third virtual machine 540, and may be configured to transmit shared data to the shared memory 508 through the security manager 526 based thereon.

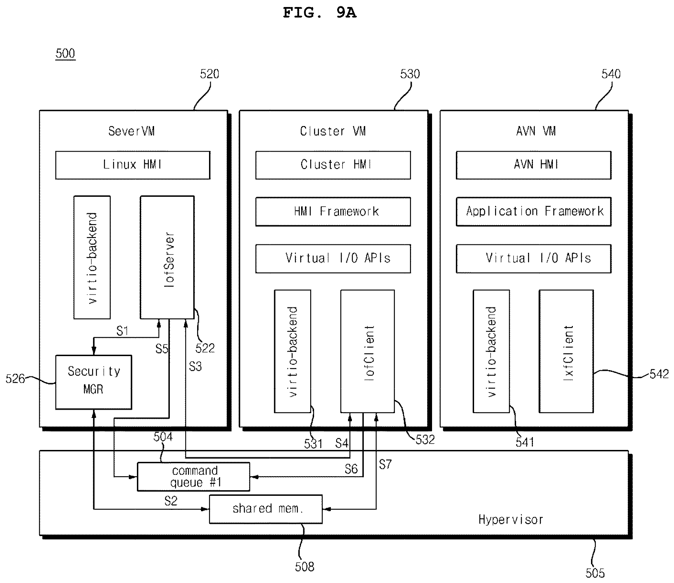

. FIG. 9A is a view illustrating transmission of shared data in more detail.

. Referring to the figure, to transmit shared data, the input and output server interface 522 in the first virtual machine 520 transmits a request for allocation of the shared memory 508 to the security manager 526 (S1).

. Subsequently, the security manager 526 may be configured to allocate the shared memory 508 using the hypervisor 505 (S2), and may write shared data in the shared memory 508.

. Meanwhile, the input and output client interfaces 532 and 542 may be configured to transmit a request for connection to the input and output server interface 522 after allocation of the shared memory 508 (S3).

. Meanwhile, the input and output server interface 522 transmits information regarding the shared memory 508 including key data to the input and output client interfaces 532 and 542 after allocation of the shared memory 508 (S4). At this time, the key data may be private key data.

. Meanwhile, the first virtual machine 520 in the processor 175 may be configured to transmit information regarding the shared memory 508 to the second virtual machine 530 and the third virtual machine 540 after setting of the shared memory 508.

. Subsequently, the input and output server interface 522 in the first virtual machine 520 is configured to generate a command or a command queue for event processing, other than data, to control distributed processing between the virtual machines (S5).

. The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

. Subsequently, the input and output client interfaces 532 and 542 access the command queue buffer 504 to receive the generated command queue or information regarding the command queue (S6).

. For example, in response to the commands transmitted to the input and output client interfaces 532 and 542 being the same, the generated command queues may be the same.

. As another example, in response to the commands transmitted to the input and output client interfaces 532 and 542 being different from each other, different command queues may be transmitted to the input and output client interfaces 532 and 542.

. Subsequently, the input and output client interfaces 532 and 542 may access the shared memory 508 based on the received key data (S5), and may copy or read the shared data from the shared memory 508 (S7).

. Particularly, when the input and output client interfaces 532 and 542 receive the same shared data, the input and output client interfaces 532 and 542 may access the shared memory 508 based on the same command queues and the same key data (S5), and may copy or read the shared data from the shared memory 508.

. Consequently, the second virtual machine 530 and the third virtual machine 540 may access the shared memory 508, and may eventually share the shared data.

. For example, in the case in which the shared data are image data, the second virtual machine 530 and the third virtual machine 540 may share the image data, and eventually the plurality of displays 180a and 180b in the vehicle may be configured to display the same shared images in a synchronized state.

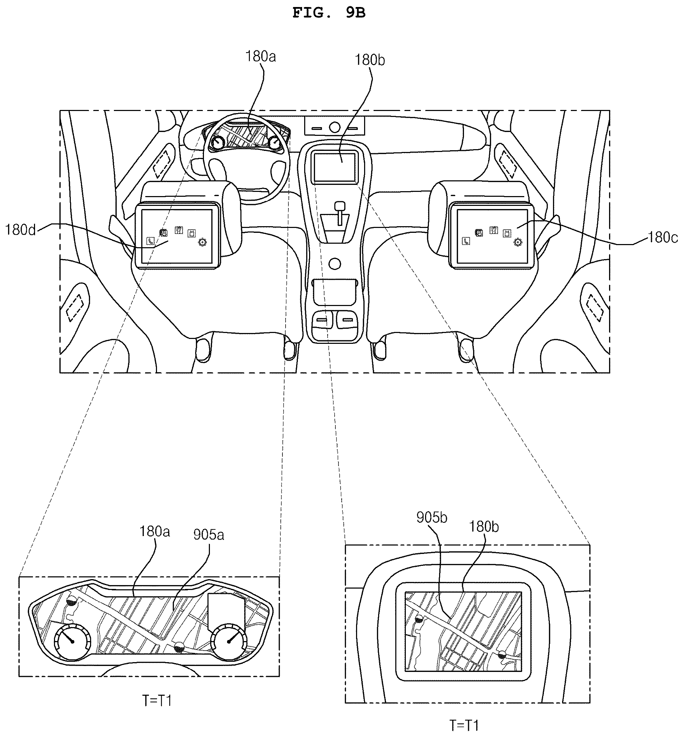

. FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

. FIG. 9B illustrates that an image 905a displayed on the first display 180a and an image 905b displayed on the second display 180b are synchronized, whereby the same images 905a and 905b are displayed at the time of T1.

. That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may be configured to display the same images in a synchronized state.

. FIG. 10 shows an example of an internal circuit diagram of a display apparatus for vehicle according to the present disclosure.

. Referring to the figure, the display apparatus 100x for vehicle according to the present disclosure includes the signal processing device 170, the display device 180, and the audio output device 185.

. The signal processing device 170 may include a processor 175 corresponding to the CPU, a graphic processor 175g, an overlay processor 175v, and an audio processor 175u.

. The processor 175 may be configured to execute a hypervisor 505x and execute an operating system 1000x on the hypervisor 505x.

. In the hypervisor 505x, a graphic driver 1002 for driving the graphic processor 175g, a display backend driver 1004 for driving the graphic processor 175g or the overlay processor 175v, and an audio backend driver 1006 for driving the audio processor 175u may be executed.

. Meanwhile, in the operating system 1000x, an application 1028, a window system 1026 and a rendering library 1024 related to the application 1028, an audio flinger 1034, a display frontend driver 1022 corresponding to the display backend driver 1004, an audio focus manager 1036, and an audio frontend driver 1032 corresponding to the audio backend driver 1006 may be executed.

. According to the display apparatus 100x for vehicle in FIG. 10, a 2D or 3D rendering request of the operating system 1000x is transmitted to the graphic processor 175g through the hypervisor 505x, and the operating system 1000x is mapped to the overlay processor 175v which is a specific hardware overlay through the hypervisor 505x.

. According to the display apparatus 100x for vehicle in FIG. 10, there is a disadvantage in that as many overlay processors 175v are required as display devices, overlay mapping is fixed, and furthermore, a size and a position (x, y, z) of the overlay are fixed.

. In addition, according to the display apparatus 100x for vehicle in FIG. 10, a sound output path of the application is fixed, and the application is fixedly mapped to a specific audio device, i.e., a specific speaker, so a sound output is global or fixed.

. Meanwhile, when there are a plurality of operating systems 1000x, the audio focus is not integrated and managed between different virtual machines, so there is a disadvantage in that a specific virtual machine must be in charge of the audio output.

. Therefore, the present disclosure provides a method for stably outputting the sound corresponding to the image. In particular, provided is a method in which even though the number of virtual machines is increased, the sound corresponding to the image may be stably output, and furthermore, even though the operating systems of the plurality of virtual machines are different from each other, the sound corresponding to the image may be stably output. This will be described with reference to FIG. 11 or below.

. FIG. 11 shows an example of an internal block diagram of a display apparatus for vehicle according to another embodiment of the present disclosure.

. Referring to the figure, the display apparatus 100 for vehicle according to the embodiment of the present disclosure includes the signal processing device 170, the display device 180, and the audio output device 185.

. The audio output device 185 may include a plurality of speakers 1311 to 1317 of FIG. 13.

. Meanwhile, the signal processing device 170 includes the processor 175 corresponding to the CPU.

. Meanwhile, the signal processing device 170 may further include the graphic processor 175g, the overlay processor 175v, and the audio processor 175u.

. The processor 175 may be configured to execute a hypervisor 505, and execute an operating system 1000 on the hypervisor 505.

. Meanwhile, the hypervisor 505 executes the display manager 527 for controlling the image displayed in the first display 180a or the second display 180b, and the audio manager 525 for controlling the sound corresponding to the image displayed in the first display 180a or the second display 180b.

. Meanwhile, the hypervisor 505 may further include the window manager 1008 for window control of the image displayed in the first display 180a or the second display 180b, and a seat audio provider 1009 providing seat audio information to the audio manager 525.

. Meanwhile, the hypervisor 505 may be configured to further execute the graphic driver 1002 for driving the graphic processor 175g, the virtual GPU backend driver 1004 for the graphic driver 1002, the window system 1005 for the overlay processor 175v, a window 1007 for the window system 1005, a native window 1013 for a preview, an audio server 1011 for driving the audio processor 175u, and the audio backend driver 1006 for the audio server 1011.

. Meanwhile, the operating system 1000 may be configured to execute the virtual GPU frontend driver 1023 corresponding to the virtual GPU backend driver 1004, a virtual play 1025 corresponding to the window 1007, and an audio monitor and controller 1039 corresponding to the audio manager 525.

. Meanwhile, the operating system 1000 may be configured to execute the application 1028, the window system 1026 and the rendering library 1024 related to the application 1028, the audio flinger 1034, the audio focus manager 1036, and the audio frontend driver 1032 corresponding to the audio backend driver 1006.

. According to the display apparatus 100 for vehicle in FIG. 11, the 2D or 3D rendering request of the operating system 1000 is transmitted to the graphic processor 175g through the hypervisor 505, and the operating system 1000 is mapped to the overlay processor 175v which is a specific hardware overlay through the hypervisor 505.

. According to the display apparatus 100 for vehicle in FIG. 10, the 2D or 3D rendering request of the application 1028 may be transmitted to the graphic processor 175g through the hypervisor 505.

. Meanwhile, the operating system 1000 may recognize the virtual play 1025 through the virtual GPU backend driver 1004 or the virtual GPU frontend driver 1022.

. Accordingly, the virtual play 1025 is mapped the window 1007 in the hypervisor 505.

. Meanwhile, the control of the virtual play 1025 in the operating system 1000 may be replaced with the control of the window 1007 in the hypervisor 505.

. Accordingly, the virtual play 1025 is free from constraints of the overlay processor 175v due to the addition of the display device, and the size or position (x, y, z) of the virtual play 1025 is changeable like the window.

. Furthermore, it is possible to support a composition and an animation between application screens and a native screen in the hypervisor 505.

. Meanwhile, the hypervisor 505 may be configured to transmit a graphic signal to the graphic processor 175g, transmit an overlay signal to the overlay processor 175v, or transmit an audio signal to the audio processor 175u.

. Meanwhile, the display manager 527 may be configured to manage creation or removal of the virtual play 1025.

. Meanwhile, the virtual GPU backend driver 1004 may be configured to relay the 2D or 3D rendering request, and perform the creation of the virtual play 1025 or creation of the window 1007.

. Meanwhile, the window manager 1008 may be configured to perform attribute setting or management of the native window on the hypervisor 505 and the window 1007 of the virtual play.

. Meanwhile, the window manager 1008 may be configured to set a position and an attribute of the window based on window information loaded upon booting.

. Meanwhile, the window 1007 may be configured to provide an Android screen, a Linux screen, or a QNX screen.

. Meanwhile, the audio server 1011 may be configured to integrate and process an audio in the operating system 1000 in the hypervisor 505.

. For example, the audio server 1011 may be configured to determine an audio output path.

. As another example, the audio server 1011 may be configured to dynamically change mapping between the audio processor 175u and the speaker in the audio output device 185.

. Meanwhile, the audio manager 521 may be configured to receive information such as an audio play state, a focus management state, etc., in the virtual machine.

. Meanwhile, the audio manager 521 may be configured to remotely control the audio focus in the virtual machine.

. In particular, the audio manager 521 may be configured to integratedly manage audio focuses in all virtual machines and the hypervisor 505.

. For example, the audio manager 521 may be configured to determine the audio output path.

. As another example, the audio manager 521 may be configured to dynamically change mapping between the audio processor 175u and the speaker in the audio output device 185.

. Meanwhile, the audio manager 525 in the hypervisor 505 may be configured to process the audio signal corresponding to the image displayed in the image displayed in the first display 180a or the second display 180b.

. Meanwhile, the audio manager 525 in the hypervisor 505 is configured to allocate corresponding audio signals to the plurality of speakers in the vehicle, respectively. Accordingly, it is possible to stably output the sound corresponding to the image.

. Meanwhile, the audio manager 525 in the hypervisor 505 may be configured to allocate the first audio signal to the first speaker in response to displaying the first image on the first display 180a and allocate the second audio signal to the second speaker in response to displaying the second image on the second display 180b. Accordingly, it is possible to stably output the sound corresponding to the image.

. Meanwhile, the audio manager 525 in the hypervisor 505 may be configured to allocate the first audio signal in which noise canceling is not performed to the first speaker, and allocate the second audio signal in which the noise canceling is performed to the second speaker. Accordingly, it is possible to stably output the sound corresponding to the image.

. Meanwhile, the audio manager 525 in the hypervisor 505 may be configured to allocate an audio signal in which the noise canceling is not performed to some of the plurality of speakers and allocate an audio signal in which the noise canceling is performed to some other speakers. Accordingly, it is possible to stably output the sound corresponding to the image.

. Meanwhile, the audio manager 525 in the hypervisor 505 may be configured to allocate an audio signal including safety driving information to some of the plurality of speakers, and allocate an audio signal not including the safety driving information to some other speakers. Accordingly, it is possible to stably output the sound corresponding to the image.

. Meanwhile, the audio manager 525 in the hypervisor 505 may be configured to allocate the first audio signal to the first speaker in response to displaying the first image on the first display 180a, allocate the second audio signal to the second speaker in response to displaying the second image on the second display 180b, and allocate a third audio signal to a second speaker 1313 in response to displaying a third image on a third display 180c. Accordingly, it is possible to stably output the sound corresponding to the image.

. Meanwhile, the audio manager 525 in the hypervisor 505 may be configured to set a shared memory 508 based on the hypervisor 505 to transmit the same audio to the second virtual machine 530 and the third virtual machine 540. Accordingly, it is possible to stably output the sound corresponding to the image.

. Meanwhile, the audio manager 525 in the hypervisor 505 may be configured to transmit first audio data to a shared memory 508 based on the hypervisor 505, and each of the second virtual machine 530 and the third virtual machine 540 may be configured to receive the first audio data in the shared memory 508 to output the same sound from speakers managed, respectively. Accordingly, it is possible to stably output the sound corresponding to the image.

. Meanwhile, when the second virtual machine 530 and the third virtual machine 540 are executed by different operating systems, the audio manager 525 in the hypervisor 505 may be configured to integratedly manage the audio signal in the virtual machine 530 and the audio signal in the third virtual machine 540, or control the audio focus. Accordingly, even though operating systems of a plurality of virtual machines are different from each other, it is possible to stably output the sound corresponding to the image.

. FIG. 12A is a view describing an example of display of an overlay in a system driven in the signal processing device according to an embodiment of the present disclosure.

. Referring to the figure, the processor 175 in the signal processing device 170 according to the embodiment of the present disclosure is configured to execute the hypervisor 505, and execute the first virtual machine 520, the second virtual machine 530, and the third virtual machine 540 on the hypervisor 505.

. Meanwhile, the first virtual machine 520 according to the embodiment of the present disclosure executes the display manager 527 and the audio manager 521.

. Meanwhile, the display manager 527 may be configured to execute or include an overlay controller 527a controlling an overlay, a layer controller 527b controlling a layer, and a composition controller 527c controlling a configuration or a sequence of the layer.

. Meanwhile, the audio manager 521 may be configured to execute or include a path controller 1102 controlling a path of the audio signal, and a layer controller 1103 controlling a layer of the audio signal.

. Meanwhile, the audio manager 525 may be configured to process the audio signal corresponding to the image displayed in the image displayed in the first display 180a or the second display 180b.

. Meanwhile, the audio manager 525 is configured to allocate corresponding audio signals to the plurality of speakers in the vehicle, respectively. Accordingly, it is possible to stably output the sound corresponding to the image.

. Meanwhile, the audio manager 525 may be configured to allocate the first audio signal to the first speaker in response to displaying the first image on the first display 180a and allocate the second audio signal to the second speaker in response to displaying the second image on the second display 180b. Accordingly, it is possible to stably output the sound corresponding to the image.

. Meanwhile, the audio manager 525 may be configured to allocate the first audio signal in which noise canceling is not performed to the first speaker and allocate the second audio signal in which the noise canceling is performed to the second speaker. Accordingly, it is possible to stably output the sound corresponding to the image.

. Meanwhile, the audio manager 525 may be configured to allocate an audio signal in which the noise canceling is not performed to some of the plurality of speakers and allocate an audio signal in which the noise canceling is performed to some other speakers. Accordingly, it is possible to stably output the sound corresponding to the image.

. Meanwhile, the audio manager 525 may be configured to allocate an audio signal including safety driving information to some of the plurality of speakers and allocate an audio signal not including the safety driving information to some other speakers. Accordingly, it is possible to stably output the sound corresponding to the image.

. Meanwhile, the audio manager 525 may be configured to allocate the first audio signal to the first speaker in response to displaying the first image on the first display 180a, allocate the second audio signal to the second speaker in response to displaying the second image on the second display 180b, and allocate the third audio signal to the third speaker 1313 in response to displaying a third image on the third display 180c. Accordingly, it is possible to stably output the sound corresponding to the image.

. Meanwhile, the audio manager 525 may control the shared memory 508 based on the hypervisor 505 to transmit the same audio to the second virtual machine 530 and the third virtual machine 540. Accordingly, it is possible to stably output the sound corresponding to the image.

. Meanwhile, the audio manager 525 may be configured to transmit first audio data to the shared memory 508 based on the hypervisor 505, and each of the second virtual machine 530 and the third virtual machine 540 may be configured to receive the first audio data in the shared memory 508 to output the same sound from speakers managed, respectively. Accordingly, it is possible to stably output the sound corresponding to the image.

. Meanwhile, when the second virtual machine 530 and the third virtual machine 540 are executed by different operating systems, the audio manager 525 may be configured to integratedly manage the audio signal in the virtual machine 530 and the audio signal in the third virtual machine 540, or control the audio focus. Accordingly, even though operating systems of a plurality of virtual machines are different from each other, it is possible to stably output the sound corresponding to the image.

. Meanwhile, the input/output server interface 522 in the first virtual machine 520 may be configured to execute or include a front interface VEa, which transmits a command for constructing a virtual overlay to the second virtual machine 530 and 530 and the third virtual machine 540 and 540, or receives a command for constructing the virtual overlay from the second virtual machine 530 and 530 and the third virtual machine 540 and 540.

. Meanwhile, the first virtual machine 520 according to the exemplary embodiment of the present disclosure may be configured to perform layer sequence change or display area change of the virtual overlay and transmit, to the second virtual machine 530 or the third virtual machine 540, a changed virtual overlay or information on the changed virtual overlay so that the changed virtual overlay is displayed in the first display 180a or the second display 180b.

. Meanwhile, the second virtual machine 530 or the third virtual machine 540 may be configured to combine the changed virtual overlay with each physical overlay, and may be configured to display the composite overlay on the first display 180a or the second display 180b. Consequently, the composite overlay may be displayed on the display.

. Meanwhile, the first virtual machine 520 according to another embodiment of the present disclosure may be configured to generate the virtual overlay and transmit the virtual overlay to the second virtual machine 530 or the third virtual machine 540, and the second virtual machine 530 or the third virtual machine 540 according to another embodiment of the present disclosure may be configured to perform the layer sequence change or display area change of the virtual overlay in response to displaying the virtual overlay on the first display 180a or the second display 180b.

. Meanwhile, the input and output server interface 522 in the first virtual machine 520 may include a front interface VEa configured to transmit a command for constructing the virtual overlay to the second virtual machine 530 and the third virtual machine 540 or to receive a command for constructing the virtual overlay from the second virtual machine 530 and the third virtual machine 540.

. Meanwhile, the input and output client interface 532 in the second virtual machine 530 may include a front interface VEb configured to receive a command for constructing the virtual overlay from the first virtual machine 520 or to transmit a command for constructing the virtual overlay to the first virtual machine 520.

. Meanwhile, the second virtual machine 530 may include a window manager 537 configured to control a window of an image in which an overlay will be generated or displayed and a compositor 538 configured to combine overlays or windows generated by the second virtual machine 530.

. Meanwhile, the input and output client interface 542 in the third virtual machine 540 may include a front interface VEc configured to receive a command for constructing the virtual overlay from the first virtual machine 520 or to transmit a command for constructing the virtual overlay to the first virtual machine 520.

. Meanwhile, the third virtual machine 540 may include a window manager 547 configured to control a window of an image in which an overlay will be generated or displayed and a compositor 548 configured to combine overlays or windows generated by the third virtual machine 540.

. Meanwhile, the first virtual machine 520 and the third virtual machine 540 may be configured to transmit or receive each virtual overlay or each audio signal by using the shared memory 508 as described in the descriptions of FIGS. 8, 9A, and 9B.

. For example, the first virtual machine 520 may be configured to transmit a first virtual overlay or a first audio signal generated by the first virtual machine 520 to the second virtual machine 530 and the third virtual machine 540 by using the shared memory 508.

. Meanwhile, the first virtual machine 520 may be configured to receive each virtual overlay or audio signal generated by the second virtual machine 530 and the third virtual machine 540 by using the shared memory 508.

. Meanwhile, the first virtual machine 520 may be configured to set the sequence of the plurality of virtual overlays, and transmit information regarding the set sequence to the second virtual machine 530 and the third virtual machine 540 using the shared memory 508.

. Meanwhile, the first virtual machine 520 may be configured to change the layer sequence or display area of the plurality of virtual overlays, and transmit sequence change information or area change information to the second virtual machine 530 and the third virtual machine 540 using the shared memory 508.

. Consequently, the virtual overlays having changed sequence or changed display area may be displayed on the first display 180a or the second display 180b.

. In particular, the sequence or display area may be changed using the first virtual machine 520, which is a server virtual machine, whereby the overlays displayed on the plurality of displays may be efficiently controlled.

. In addition, all overlays may be controlled using the first virtual machine 520, which is a server virtual machine, whereby rapid and accurate display may be achieved.

. Meanwhile, each of the second virtual machine 530 and the third virtual machine 540 may be configured to generate the virtual overlay, and the first virtual machine 520 may be configured to set a sequence or a display area of the overlay of the virtual overlay generated by each of the first virtual machine 520 and the third virtual machine 540. Accordingly, it is possible to control the sequence or display area of the virtual overlay.

. Meanwhile, the first virtual machine 520 may be configured to change the overlay sequence or display area of the virtual overlays generated by the second virtual machine 530 and the third virtual machine 540. Consequently, the sequence or display area of the virtual overlays may be changed.

. Meanwhile, the first virtual machine 520 may be configured to change the construction of the layer displayed on the first display 180a or the second display 180b during run time. Consequently, the construction of the layer displayed during run time may be changed.

. Meanwhile, the first virtual machine 520 may be configured to generate a virtual overlay displayed on both the first display 180a and the second display 180b. Consequently, the generated virtual overlay may be easily displayed.

. Meanwhile, the first virtual machine 520 may be configured to move and display the generated virtual overlay on the first display 180a or the second display 180b. Consequently, the generated virtual overlay may be easily moved.

. Meanwhile, the first virtual machine 520 may be configured to move an audio signal corresponding to the generated virtual overlay and output by a speaker corresponding to the first display 180a or the second display 180b. Accordingly, a sound corresponding to the movement of the generated virtual overlay can be stably output.

. FIG. 11 illustrates that a virtual overlay OVL1 generated by the second virtual machine 530 is displayed on a virtual overlay VOLm1 generated by the first virtual machine 520 and a composite overlay generated by the compositor 538 is displayed on the first display 180a. Consequently, efficient resource management may be achieved.

. Meanwhile, FIG. 11 illustrates that a virtual overlay OVL2 generated by the third virtual machine 540 is displayed on the virtual overlay VOLm1 generated by the first virtual machine 520 and a composite overlay generated by the compositor 548 is displayed on the second display 180b. Consequently, efficient resource management may be achieved.

. FIG. 12B is a view describing an example of overlay display and audio output in the system driven in the signal processing device according to an embodiment of the present disclosure.

. Referring to the figure, the processor 175 in the signal processing device 170 may be configured to execute the hypervisor 505, and execute a first operating system 1000a and a second operating system 1000b on the hypervisor 505.

. Meanwhile, a first image 1210 and a second image 1220 executed by the first operating system 1000a may be displayed on the first display 180a and the second display 180b, respectively.

. Meanwhile, a third image 1230 executed by the second operating system 1000b may be displayed on the third display 180c.

. Meanwhile, the hypervisor 505 may be configured to execute a first window VSa, a second window VSb, and a third window VSc corresponding to the first image 1210, the second image 1220, and the third image 1230, respectively, and execute a first audio stream ASa, a second audio stream ASb, and a third audio stream ASc corresponding to the first window VSa, the second window VSb, and the third window VSc, respectively.

. Meanwhile, the display manager 527 in the hypervisor 505 may control the first window VSa, the second window VSb, and the third window VSc, and the audio manager 521 in the hypervisor 505 may be configured to control the first audio stream ASa, the second audio stream ASb, and the third audio stream ASc.

. Meanwhile, the display manager 527 in the hypervisor 505 may be configured to map the first window VSa, the second window VSb, and the third window VSc to a first hardware overlay 1211, a second hardware overlay 1212, and a third hardware overlay 1213 in the signal processing device 170, respectively.

. Meanwhile, the audio manager 521 in the hypervisor 505 may be configured to map the first audio stream ASa, the second audio stream ASb, and the third audio stream ASc to a first speaker 1311, a second speaker 1312, and a third speaker 1313, respectively.

. Meanwhile, when the second image 1220 displayed in the second display 180b and the third image 1230 displayed in the third display 180c are switched, the display manager 527 in the hypervisor 505 may be configured to map the third window VSc and the second window VSb to the second hardware overlay 1212 and the third hardware overlay 1213, respectively.

. Meanwhile, when the second image 1220 displayed in the second display 180b and the third image 1230 displayed in the third display 180c are switched, the audio manager 521 in the hypervisor 505 may be configured to map the third audio stream ASc and the second audio stream ASb to the second speaker 1312 and the third speaker 1313, respectively. Therefore, mapping between speakers may be dynamically changed.

. Meanwhile, the first hardware overlay 1211, the second hardware overlay 1212, and the third hardware overlay 1213 in FIG. 12 may correspond to the overlays in the overlay processor 175v in FIG. 11.

. FIG. 13 is a view showing a plurality of speakers 1311 to 1317 in a vehicle.

. Referring to the figure, the plurality of speakers 1311 to 1317 may be disposed in the vehicle 200.

. The first speaker 1311 may correspond to a cluster display 180a, and the second speaker 1312 may correspond to an AVN display 180b.

. Meanwhile, the third speaker 1313 may correspond to a passenger's seat display or the AVN display 180b.

. Meanwhile, the fourth speaker 1314 may correspond to a rear left RSE display, and the fifth speaker 1315 may correspond to a rear right RSE display 180c.

. Alternatively, the fourth speaker 1314 may correspond to the cluster display 180a, and the fifth speaker 1315 may correspond to the passenger's display or the AVN display 180b.

. Meanwhile, the sixth speaker 1316 may correspond to the rear left RSE display, and the seventh speaker 1317 may correspond to the rear right RSE display 180c.

. In the figure, a first table TBa and a fourth table TBd may be provided to the audio manager 525 from the seat audio provider 1009 in FIG. 11.

. For example, the first table TBa corresponding to setting information of the first speaker 1311 may include noise canceling non-application information, safety driving notification application information, audio ducking application information, channel information upon sound output such as 5.1 channel, audio language information such as Korean, and equalizer type information such as classic.

. For example, the second table TBb corresponding to setting information of the third speaker 1313 may include noise canceling application information, the safety driving notification application information, the audio ducking application information, the channel information upon sound output such as 5.1 channel, the audio language information such as Korean, and equalizer type information such as jazz.

. Meanwhile, the third table TBc corresponding to setting information of the fourth speaker 1314 and the sixth speaker 1316 may include the noise canceling application information, safety driving notification non-application information, audio ducking non-application information, channel information upon sound output such as 7.1 channel, audio language information such as dubbing, and equalizer type information such as rock.

. Meanwhile, the fourth table TBd corresponding to setting information of the fifth speaker 1315 and the seventh speaker 1317 may include the noise canceling application information, the safety driving notification non-application information, the audio ducking non-application information, the channel information upon sound output such as 7.1 channel, audio language information such as English, and the equalizer type information such as jazz.

. Meanwhile, the audio manager 525 may be configured to allocate an audio signal in which the noise canceling is not performed to some 1311 of the plurality of speakers 1311 to 1317, and allocate an audio signal in which the noise canceling is performed to some other speakers 1313 to 1317, based on the plurality of received table information TBa to TBd.

. For example, the audio manager 525 may be configured to allocate the first audio signal in which the noise canceling is not performed to the first speaker 1311 and allocate the second audio signal in which the noise canceling is performed to the second speaker 1312. Accordingly, a sound corresponding to a seat can be stably output.

. As another example, the audio manager 525 may be configured to allocate the first audio signal in which the noise canceling is not performed to the first speaker 1311 and allocate the third audio signal in which the noise canceling is performed to the third speaker 1313. Accordingly, the sound corresponding to the seat can be stably output.

. Meanwhile, the audio manager 525 may be configured to allocate an audio signal including safety driving information to some of the plurality of speakers 1311 to 1317 and allocate an audio signal not including the safety driving information to some other speakers.

. For example, the audio manager 525 may be configured to allocate the audio signal including the safety driving information to the first speaker 1311 or the third speaker 1313 among the plurality of speakers 1311 to 1317 and allocate the audio signal not including the safety driving information to the fourth to seventh speakers 1314 to 1317. Accordingly, the sound corresponding to the seat can be stably output.

. Meanwhile, the audio manager 525 may be configured to allocate the first audio signal to the first speaker 1311 in response to displaying the first image on the first display 180a and allocate the second audio signal to the second speaker 1312 in response to displaying the second image on the second display 180b.

. For example, the audio manager 525 may be configured to allocate the first audio signal corresponding to a cluster image to the first speaker 1311 in response to displaying the cluster image on the first display 180a and allocate the second audio signal corresponding to a navigation image to the second speaker 1312 in response to displaying the navigation image on the second display 180b. Accordingly, it is possible to stably output the sound corresponding to the image.

. Meanwhile, the audio manager 525 may be configured to allocate the third audio signal to the fifth speaker 1315 or the seventh speaker 1317 in response to displaying the third image on the third display 180c.

. For example, the audio manager 525 may be configured to allocate an audio signal corresponding to a game image or a streaming image to the fifth speaker 1315 or the seventh speaker 1317 in response to displaying the game image or the streaming image on the rear right RSE display 180c. Accordingly, it is possible to stably output the sound corresponding to the image.

. Meanwhile, the audio manager 525 may be configured to allocate the first audio signal corresponding to the second image to the second speaker 1312 in response to displaying the first image on the first display 180a, and displaying the second image on the second display 180b.

. For example, the audio manager 525 may be configured to allocate the first audio signal corresponding to the navigation image to the second speaker 1312 in response to displaying the cluster image on the first display 180a, and displaying the navigation image on the second display 180b.

. That is, when there is no audio signal corresponding to the cluster image, the audio manager 525 may not allocate the audio signal to the first speaker 1311. Accordingly, it is possible to stably output the sound corresponding to the image.

. Meanwhile, the audio manager 525 may be configured to allocate the second audio signal corresponding to the third image to the fifth speaker 1315 or the seventh speaker 1317 in response to displaying the third image on the third display 180c. Accordingly, it is possible to stably output the sound corresponding to the image.

. Meanwhile, the audio manager 525 may be configured to dynamically change setting for the plurality of speakers according to passenger setting.

. For example, the first to fourth tables TBa to TBd in the figure may correspond to passenger-specific setting information other than speaker-specific setting information according to a seat position.

. Specifically, the first to fourth tables TBa to TBd may correspond to setting information for first to fourth passengers, respectively.

. Specifically, when receiving identification information from a mobile terminal based on a wireless communication scheme such as Bluetooth, the signal processing device 170 may discriminate the passenger based on the identification information.

. In addition, the audio manager 525 in the signal processing device 170 may be configured to apply each of noise canceling, safety driving notification, audio ducking, sound output, audio language, or equalizer based on passenger-specific tables TBa to TBd corresponding to the identified passengers. Accordingly, audio setting may be dynamically changed and applied.

. FIG. 14 shows an example of an operating method of a signal processing device according to an embodiment of the present disclosure.

. Referring to the figure, the audio manager 525 in the signal processing device 170 receives a display change input of an image to be displayed (S1412) and determines an audio output position based on the change input (S1413).

. For example, when the first image is displayed on the second display 180b, and the change input is received by the third display 180c, the audio manager 525 in the signal processing device 170 may be configured to change an output position of the audio signal corresponding to the first image from the first speaker 1311 to the fifth speaker 1315 based on the third table TBc.

. In addition, the audio manager 525 in the signal processing device 170 receives seat-specific audio setting information (S1414), and receives passenger individual-specific setting information (S1416).

. In addition, the audio manager 525 in the signal processing device 170 may be configured to change an audio language (S1418), selects an audio output system (S1420) and change an equalizer (S1422).

. For example, when the first image is displayed on the second display 180a, and the change input is received by the third display 180c, the audio manager 525 in the signal processing device 170 may be configured to change the audio language from Korean to English and change the equalizer from classic setting to jazz setting, based on the third table TBc.

. Meanwhile, the audio manager 525 in the signal processing device 170 determines whether the safety driving notification is needed (S1424), and when the safety driving notification is needed, receives ADAS information to mix the ADAS information with the audio signal (S1425).

. For example, when the third image is displayed on the third display 180c, and the change input is received by the second display 180b, the audio manager 525 in the signal processing device 170 receives the ADAS information related to safety driving notification information based on the second table TBb. At this time, the ADAS information may include distance information from a front vehicle or speed information of a vehicle.

. In addition, the audio manager 525 in the signal processing device 170 may control an audio signal corresponding to a third image in which the distance information from the front vehicle or the speed information of the vehicle is mixed to be output from the third speaker 1313.

. At this time, the audio manager 525 in the signal processing device 170 may control the audio signal corresponding to the third image to output a volume smaller than the existing sound volume by the audio ducking.

. Meanwhile, the audio manager 525 in the signal processing device 170 determines whether external noise needs to be blocked when the safety driving notification is not needed (S1426), and applies noise reduction when the external noise needs to be blocked (S1427).

. In addition, the audio manager 525 in the signal processing device 170 completes audio routing and setting (S1428).

. FIGS. 15A to 19 are views referred to in the description of FIG. 14.

. FIG. 15A is a view describing layout change.

. Referring to the figure, the window manager 1008 in the signal processing device 170 may be configured to load a virtual machine-specific display and an initial window configuration (S1510).

. Next, the virtual GPU driver 1023 may be configured to generate a virtual display 1025 for each of virtual machines 520 to 540 predefined after booting (S1513).

. Next, the virtual GPU driver 1023 may be configured to generate the window 1007 on the hypervisor 505 corresponding to the virtual display 1025 (S1514).

. Next, the generated window 1007 may be registered in the window manager 1008 (S1515).

. Next, the window manager 1008 may be configured to set the generated window according to a configuration set in advance (S1516).

. Next, the display manager 527 may be configured to request the window manager 1008 to change a position and a size of a display (S1517).

. Next, the window manager 1008 may be configured to change an attribute of the window 1007 which is in charge of the display (S1519).

. Accordingly, a screen configuration may be initialized, and a layout may be changed.

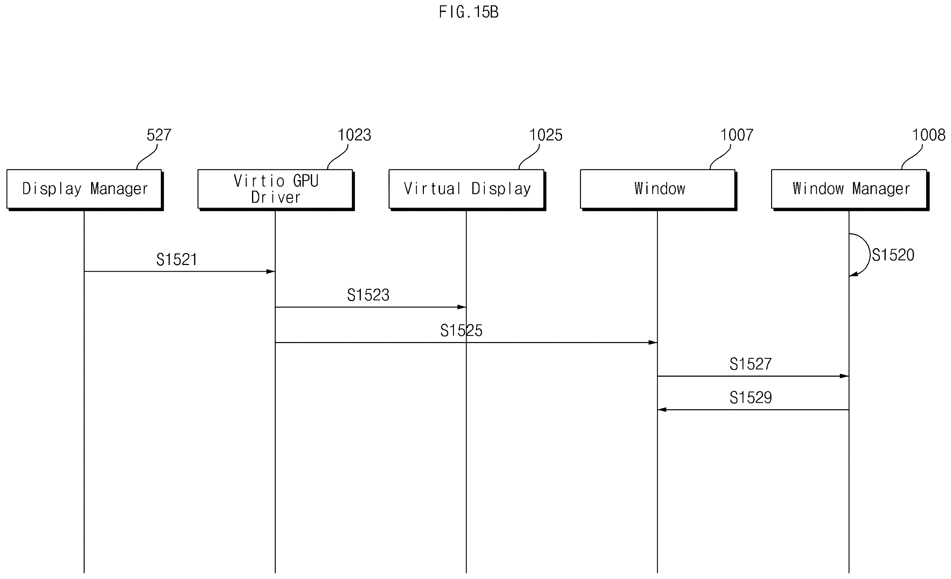

. FIG. 15B is a view describing dynamic screen addition.

. Referring to the figure, the window manager 1008 in the signal processing device 170 may be configured to load the display for each of the virtual machines 520 to 540, and the initial window configuration (S1520).

. Next, the display manager 527 may be configured to transmit display information to be dynamically generated to the virtual GPU driver 1023 (S1521).

. Next, the display manager 527 may be configured to generate a new virtual display 1025 in the virtual machine (S1523).

. Next, the display manager 527 may be configured to generate a window 1007 corresponding to the new virtual display 1025 (S1525).

. Next, the generated window 1007 may be registered in the window manager 1008 (S1527).

. Next, the window manager 1008 may be configured to set the generated window 1007 according to a configuration set in advance (S1529).

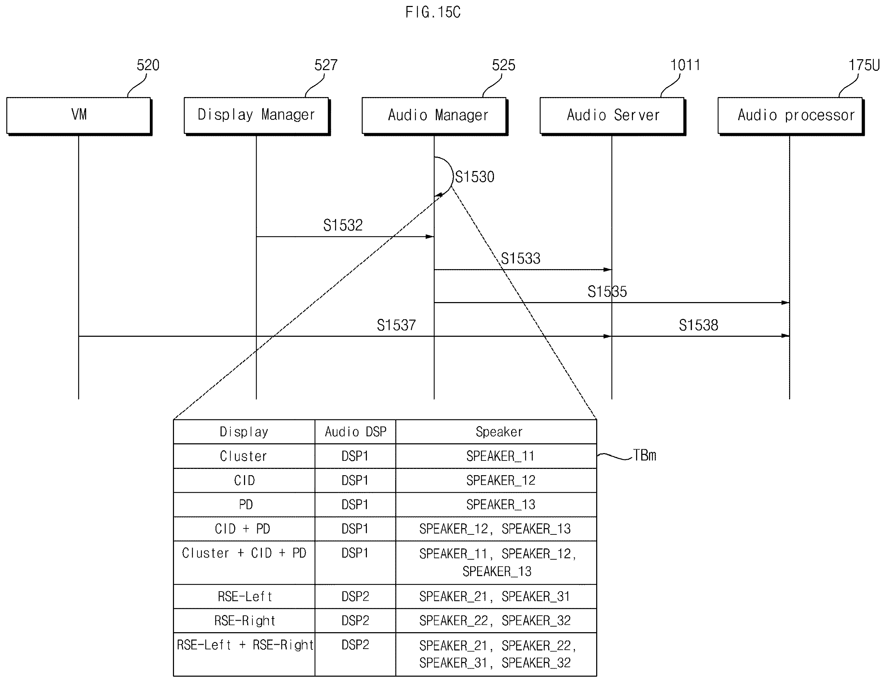

. FIG. 15C is a view describing an audio configuration.

. Referring to the figure, the audio manager 525 in the signal processing device 170 may be configured to load mapping setting between a display and a speaker of each seat (S1530).

. For example, the audio manager 525 in the signal processing device 170 may be configured to load information on a table TBm mapping the display, an audio processor, and the speaker.

. As another example, the audio manager 525 in the signal processing device 170 may be configured to load mapping setting between displays 180a, 180b, and 180c of respective seats, and the plurality of tables TBa to TBd of FIG. 13.

. Next, when the display of the image output from the virtual machine is changed, the display manager 527 may be configured to notify a position of the changed display to the audio manager 525 (S1532).

. Next, the audio manager 525 may be configured to select a speaker corresponding to the display to be changed and transmit information regarding the selected speaker to the audio server 1011 (S1533).

. Next, the audio manager 525 may be configured to select a speaker which is to output and transmit information regarding the selected speaker to the audio processor 175u (S1535).

. Next, the virtual machine 520 may be configured to transmit the audio signal to the audio server 1011 (S1537), and the audio server 1011 may be configured to transmit the audio signal to the audio processor 175u (S1538).

. Accordingly, the audio signal processed by the audio processor 175u may be transmitted to the selected speaker, and the corresponding sound may be output from a speaker corresponding to the changed display.

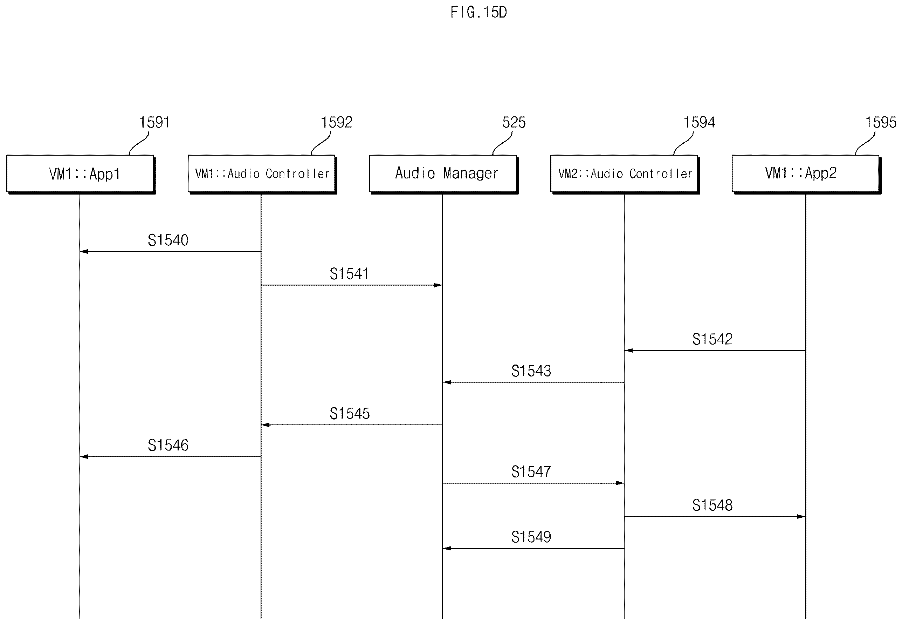

. FIG. 15D is a view describing an audio focus.

. Referring to the figure, the audio controller 1592 in the second virtual machine 530 transmits the audio signal to the application 1591 (S1540).

. Next, the audio controller 1592 in the second virtual machine 530 may be configured to transmit an audio focus state to the audio manager 525 (S1541).

. Next, the second application 1595 in the second virtual machine 530 may be configured to request a focus to the second audio controller 1594 for audio playback (S1542).

. Next, the second audio controller 1594 may be configured to request an audio focus based on the hypervisor 505 to the audio manager 525 (S1543).

. Meanwhile, the audio manager 525 may be configured to determine whether to allow the audio focus request according to an application having the audio focus, and an audio policy.

. Next, the audio manager 525 may be configured to request the audio controller 1592 to recover the audio focus based on the hypervisor 505 (S1545).

. Next, the audio controller 1592 may be configured to transmit audio playback and stop commands to the application 1591 (S1546). Accordingly, the audio playback in the application 1591 may be stopped.

. Next, the audio manager 525 may grant the audio focus based on the hypervisor 505 to the second audio controller 1594 (S1547).

. Next, the second audio controller 1594 may control the second application 1595 to perform the audio playback based on the granted audio focus (S1548).

. Accordingly, the audio playback in the second application 1595 may be performed.

. Next, the second audio controller 1594 530 may be configured to transmit the audio focus state to the audio manager 525 (S1549). Accordingly, controlling the audio focus may be performed.

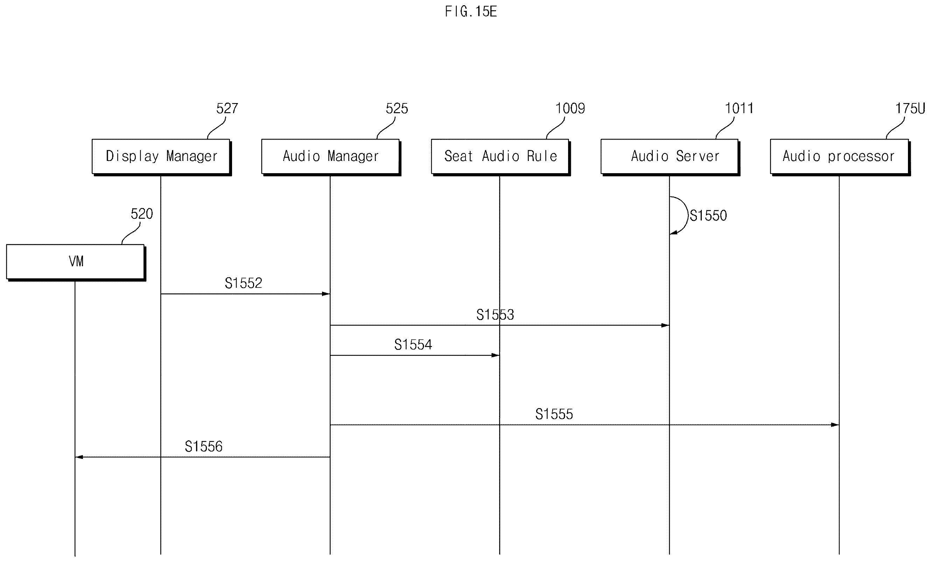

. FIG. 15E is a view describing audio setting control.

. Referring to the figure, the audio server 1011 loads audio setting for each seat.

. For example, the audio server 1011 may be configured to load the setting for each of the tables TBa to TBd of FIG. 13.

. Next, the display manager 527 may be configured to transmit position information of the virtual play 1025 to the audio manager 525 (S1552).

. Next, the audio manager 525 may be configured to transmit the position information of the virtual play 1025 to the audio server 1011 (S1553).

. Next, the audio manager 525 may be configured to receive seat audio information from the seat audio provider 1009 (S1554).

. Next, the audio manager 525 may be configured to transmit setting audio information corresponding to the seat audio information to the audio server 1011 (S1555).

. In addition, the audio manager 525 may be configured to transmit seat based setting audio information to the virtual machine 520.

. Accordingly, the virtual machine 520 may reproduce the audio signal based on the seat based setting audio information.

. Accordingly, as in FIG. 13, the virtual machine 520 may be configured to selectively perform the noise canceling or selectively provide the safety driving information.

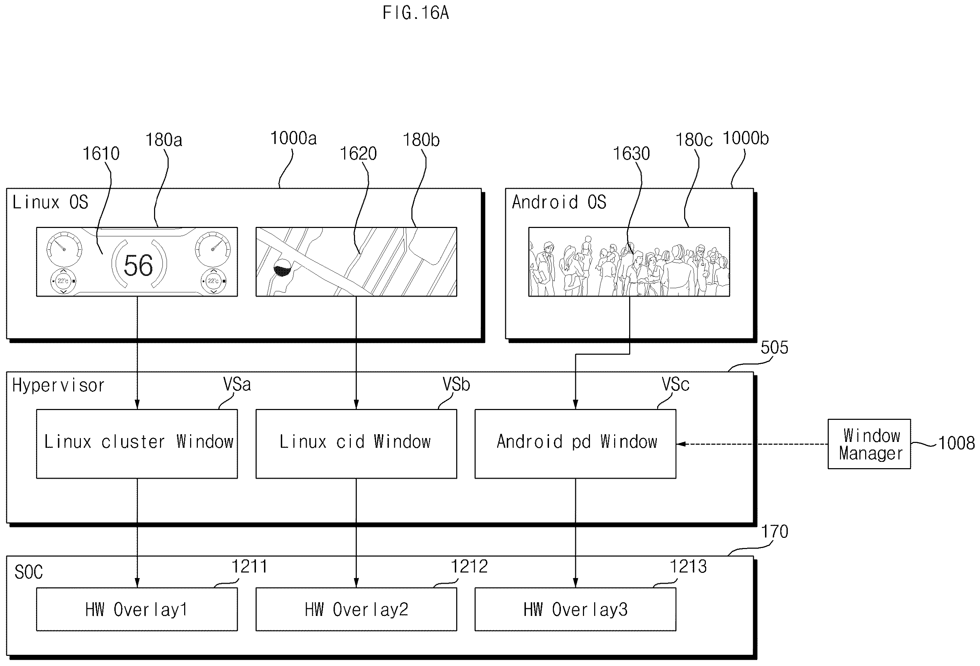

. FIG. 16A is a view describing an example of a screen configuration upon booting.

. Referring to the figure, the processor 175 in the signal processing device 170 may be configured to execute the hypervisor 505 and execute the first operating system 1000a and the second operating system 1000b on the hypervisor 505.

. Meanwhile, the first image 1610 and the second image 1620 executed by the first operating system 1000a may be displayed on the first display 180a and the second display 180b, respectively.

. Meanwhile, the third image 1630 executed by the second operating system 1000b may be displayed on the third display 180c.

. Meanwhile, the hypervisor 505 may be configured to execute the first window VSa, the second window VSb, and the third window VSc corresponding to the first image 1610, the second image 1620, and the third image 1630, respectively.

. In particular, the window manager 1008 in the hypervisor 505 may control the first window VSa, the second window VSb, and the third window VSc

. Meanwhile, the window manager 1008 in the hypervisor 505 may be configured to map the first window VSa, the second window VSb, and the third window VSc to the first hardware overlay 1211, the second hardware overlay 1212, and the third hardware overlay 1213 in the signal processing device 170, respectively.

. Meanwhile, the virtual GPU driver 1023 may be configured to generate the virtual display 1025 and the window 1007 set in advance upon booting.

. The window manager 1008 may be configured to set a position and an attribute of each window based on the display information or window information loaded upon booting.

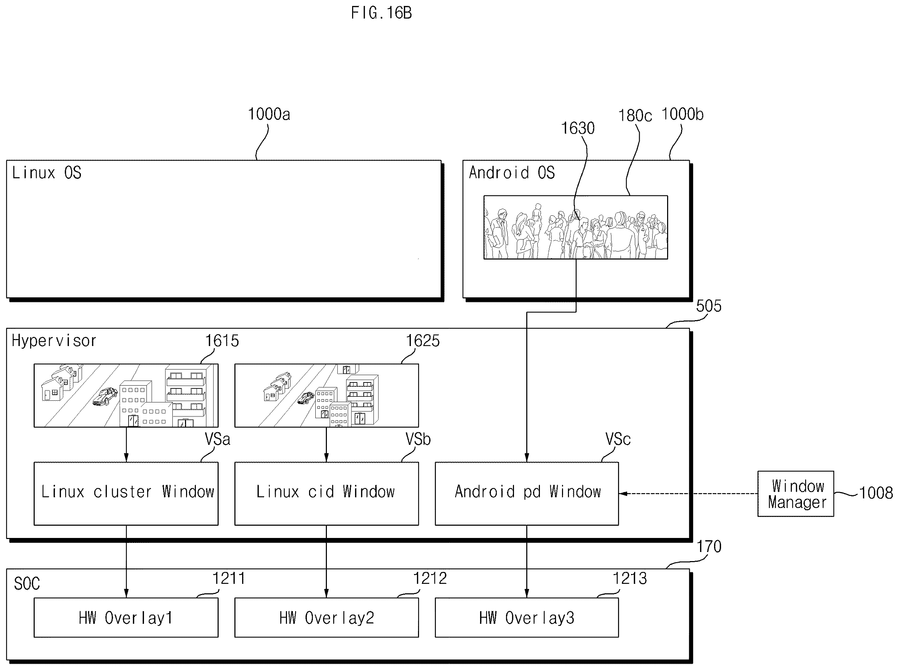

. FIG. 16B is a view describing another example of the screen configuration upon booting.

. Referring to the figure, the processor 175 in the signal processing device 170 may be configured to execute the hypervisor 505, and execute the first operating system 1000a and the second operating system 1000b on the hypervisor 505.

. Meanwhile, the third image 1630 executed by the second operating system 1000b may be displayed on the third display 180c.

. Meanwhile, the hypervisor 505 may be configured to execute the first image 1615 and the second image 1625.

. Meanwhile, the hypervisor 505 may be configured to execute the first window VSa, the second window VSb, and the third window VSc corresponding to the first image 1615, the second image 1625, and the third image 1630, respectively.

. In particular, the window manager 1008 in the hypervisor 505 may control the first window VSa, the second window VSb, and the third window VSc

. Meanwhile, the window manager 1008 in the hypervisor 505 may be configured to map the first window VSa, the second window VSb, and the third window VSc to the first hardware overlay 1211, the second hardware overlay 1212, and the third hardware overlay 1213 in the signal processing device 170, respectively.

. Meanwhile, the virtual GPU driver 1023 may be configured to generate the virtual display 1025 and the window 1007 set in advance upon booting.

. Meanwhile, the native window 1013 in the hypervisor 505 may configure display screens such as the first image 1615 and the second image 1625.

. The window manager 1008 may be configured to set the position and the attribute of each window based on the display information or window information loaded upon booting.

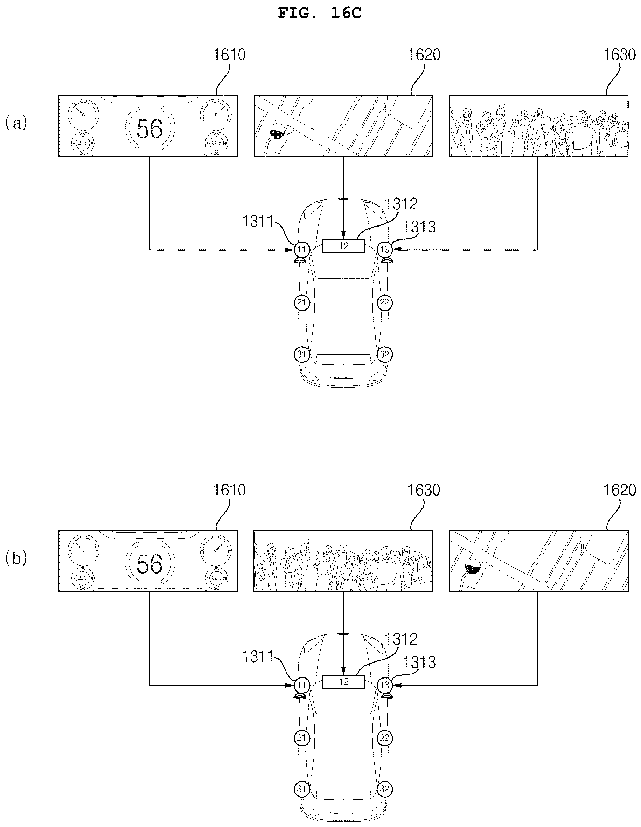

. FIG. 16C is a view describing an example of screen change.

. Referring to the figure, as in (a) of FIG. 16C, the signal processing device 170 may be configured to display the first image 1610, the second image 1620, and the third image 1630 on the cluster display 180a, the AVN display 180b, and an auxiliary display, respectively.

. Meanwhile, the signal processing device 170 may be configured to input the first audio signal, the second audio signal, and the third audio signal corresponding to the first image 1610, the second image 1620, and the third image 1630 into the first speaker 1311, the second speaker 1312, and the third speaker 1313, respectively.

. Accordingly, the first speaker 1311, the second speaker 1312, and the third speaker 1313 may output a first sound, a second sound, and a third sound corresponding to the first image 1610, the second image 1620, and the third image 1630, respectively.

. Meanwhile, the signal processing device 170 may be configured to exchange the displays of the second image 1620 and the third image 1630 based on an input signal.

. That is, the signal processing device 170 may be configured to display the first image 1610, the second image 1620, and the third image 1630 on the cluster display 180a, the AVN display 180b, and the auxiliary display, respectively.

. In response thereto, the signal processing device 170 may be configured to input the first audio signal, the third audio signal, and the second audio signal corresponding to the first image 1610, the third image 1630, and the second image 1620, respectively into the first speaker 1311, the second speaker 1312, and the third speaker 1313, respectively.

. Accordingly, the first speaker 1311, the second speaker 1312, and the third speaker 1313 may output the first sound, the second sound, and the third sound corresponding to the first image 1610, the third image 1630, and the second image 1620, respectively.

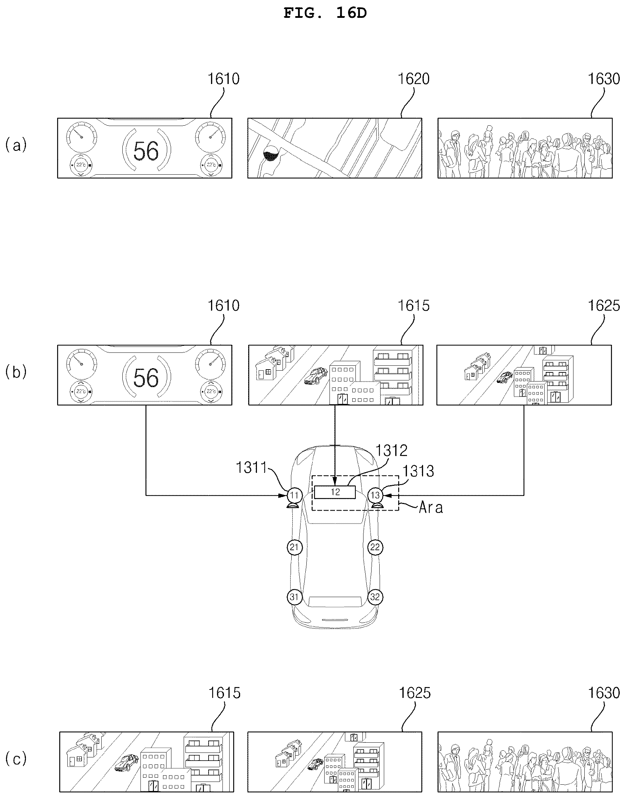

. FIG. 16D is a view describing another example of the screen change.

. Referring to the figure, as in (a) of FIG. 16D, the signal processing device 170 may be configured to display the first image 1610, the second image 1620, and the third image 1630 on the cluster display 180a, the AVN display 180b, and an auxiliary display, respectively.

. Meanwhile, as in (b) of FIG. 16D, the signal processing device 170 may be configured to expand the second image 1620, and display a part 1615 and the other part 1625 of the expanded image on the AVN display 180b and the auxiliary display, respectively, based on a first input signal.

. Meanwhile, the signal processing device 170 may be configured to input the first audio signal, the second audio signal, and the third audio signal corresponding to the first image 1610, a part 1615 of the expanded image, and the other part 1625 of the expanded image, respectively, into the first speaker 1311, the second speaker 1312, and the third speaker 1313, respectively.

. Accordingly, the first speaker 1311, the second speaker 1312, and the third speaker 1313 may output the first sound, the second sound, and the third sound corresponding to the first image 1610, a part 1615 of the expanded image, and the other part 1625 of the expanded image, respectively.

. Meanwhile, as in (c) of FIG. 16D, the signal processing device 170 may be configured to expand the second image 1620, and display a part 1615 and the other part 1625 of the expanded image on the cluster display 180a and the AVN display 180b, respectively.

. Meanwhile, the signal processing device 170 may be configured to input audio signals corresponding to a part 1615 of the expanded image, the other part 1625 of the expanded image, and the third image 1630, respectively, into the first speaker 1311, the second speaker 1312, and the third speaker 1313, respectively.

. Accordingly, the first speaker 1311, the second speaker 1312, and the third speaker 1313 may output the first sound, the second sound, and the third sound corresponding to a part 1615 of the expanded image, the other part 1625 of the expanded image, and the third image 1630, respectively.

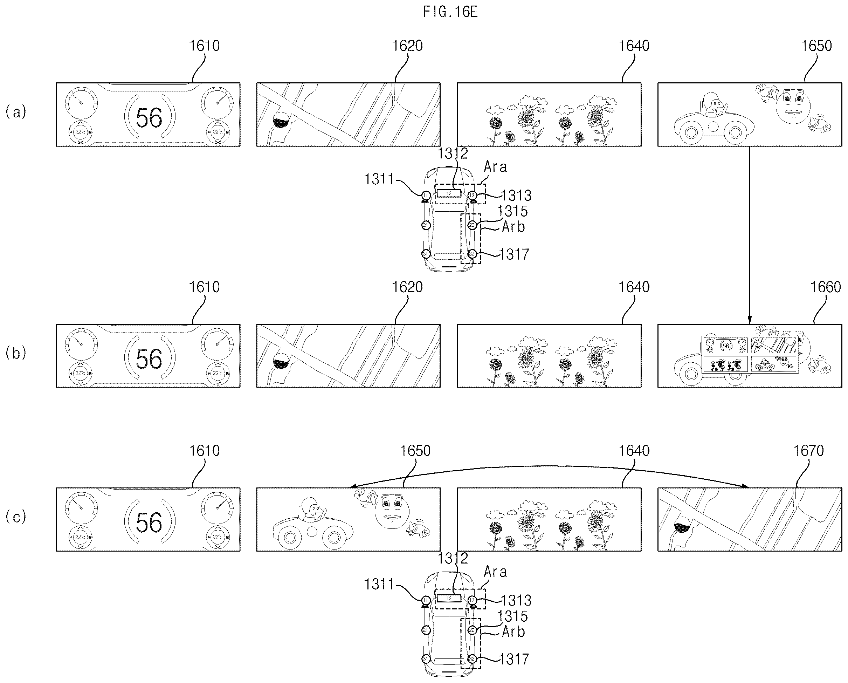

. FIG. 16E is a view describing yet another example of the screen change.

. Referring to the figure, as in (a) of FIG. 16E, the signal processing device 170 may be configured to display the first image 1610, the second image 1620, the third image 1630, and the fourth image 1650 on the cluster display 180a, the AVN display 180b, a left RSE display, and a right RSE display, respectively.

. Meanwhile, the signal processing device 170 may be configured to output a sound corresponding to the second image 1620 from the second speaker 1312 and the third speaker 1313, a sound corresponding to the third image 1640 from the fourth speaker 1314 and the sixth speaker 1316, and a sound corresponding to the fourth image 1650 from the fifth speaker 1315 and the seventh speaker 1317.

. Meanwhile, as in (b) of FIG. 16E, the signal processing device 170 may be configured to display a preview image including the first to fourth images on the right RSE display based on the input signal, etc.

. Meanwhile, the signal processing device 170 may be configured to exchange and display the second image 1620 and the fourth image 1650 based on the input signal, etc.

. That is, as in (c) of FIG. 16E, the signal processing device 170 may be configured to display the first image 1610, the fourth image 1650, the third image 1640, and the second image 1620 on the cluster display 180a, the AVN display, the left RSE display, and the right RSE display, respectively based on the input signal, etc.

. In response thereto, meanwhile, the signal processing device 170 may be configured to output a sound corresponding to the fourth image 1620 from the second speaker 1312 and the third speaker 1313, and the sound corresponding to the second image 1650 from the fifth speaker 1315 and the seventh speaker 1317.

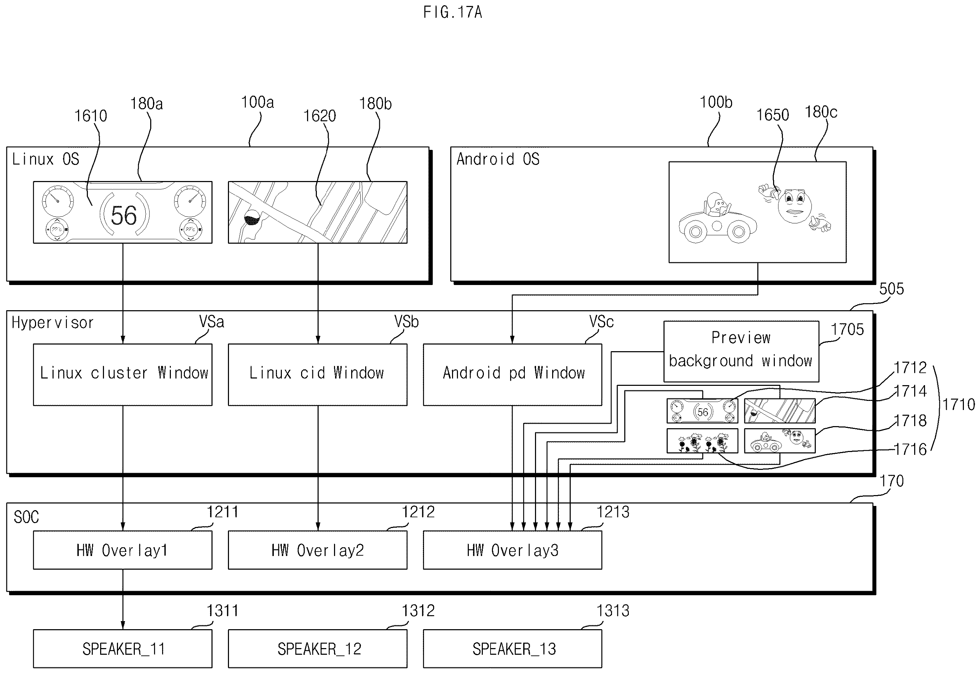

. FIG. 17A is a view describing an example of preview image display.

. Referring to the figure, the processor 175 in the signal processing device 170 may be configured to execute the hypervisor 505 and execute the first operating system 1000a and the second operating system 1000b on the hypervisor 505.

. Meanwhile, the first image 1610 and the second image 1620 executed by the first operating system 1000a may be displayed on the first display 180a and the second display 180b, respectively.

. Meanwhile, the third image 1650 executed by the second operating system 1000b may be displayed on the third display 180c.

. Meanwhile, the hypervisor 505 may be configured to execute the first window VSa, the second window VSb, and the third window VSc corresponding to the first image 1610, the second image 1620, and the third image 1650, respectively.

. In particular, the display manager 527 or the window manager 1008 in the hypervisor 505 may control the first window VSa, the second window VSb, and the third window VSc.

. Meanwhile, the display manager 527 or the window manager 1008 in the hypervisor 505 may be configured to map the first window VSa, the second window VSb, and the third window VSc to a first hardware overlay 1211, a second hardware overlay 1212, and a third hardware overlay 1213 in the signal processing device 170, respectively.

. Meanwhile, the window manager 1008 may be configured to map a preview image 1710 for a plurality of images 1712, 1714, 1716, and 1718 to the third hardware overlay 1213 based on the input signal.

. In addition, the window manager 1008 may be configured to display the preview image 1710 on the third display 180c.

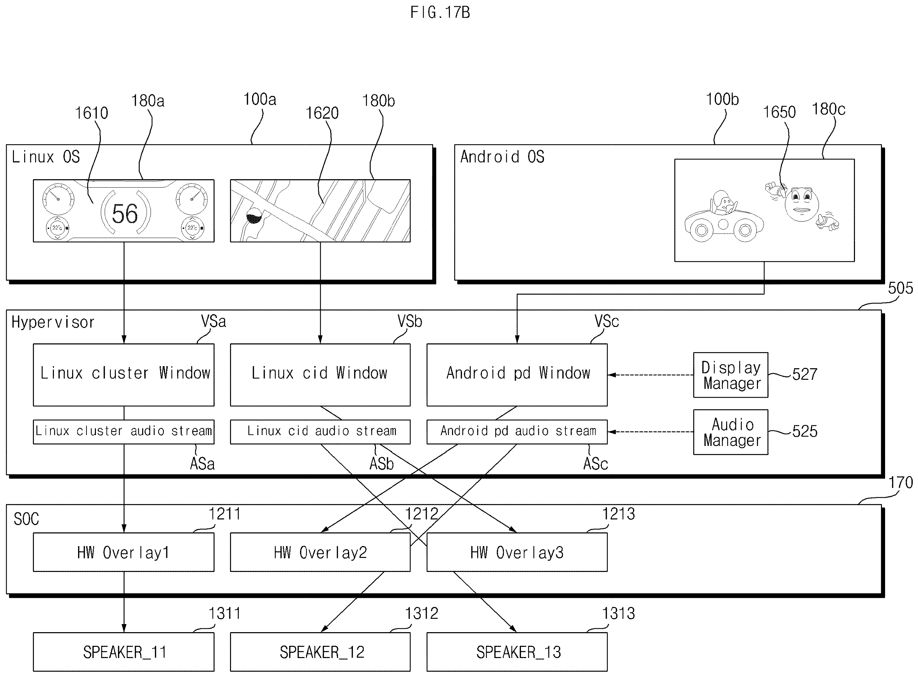

. FIG. 17B is a view describing an example of display position change of an image based on a preview image.

. Referring to the figure, the processor 175 in the signal processing device 170 may be configured to execute the hypervisor 505, and execute the first operating system 1000a and the second operating system 1000b on the hypervisor 505.

. Meanwhile, the third image 1650 executed by the second operating system 1000b may be displayed on the third display 180c.

. Meanwhile, the hypervisor 505 may be configured to execute the first image 1615 and the second image 1625.

. Meanwhile, the hypervisor 505 may be configured to execute the first window VSa, the second window VSb, and the third window VSc corresponding to the first image 1615, the second image 1625, and the third image 1650, respectively.

. In particular, the display manager 527 in the hypervisor 505 may control the first window VSa, the second window VSb, and the third window VSc.

. Meanwhile, the display manager 527 in the hypervisor 505 may be configured to map the first window VSa, the second window VSb, and the third window VSc to the first hardware overlay 1211, the second hardware overlay 1212, and the third hardware overlay 1213 in the signal processing device 170, respectively.

. Meanwhile, the audio manager 527 in the hypervisor 505 may be configured to map the first audio stream ASa, the second audio stream ASb, and the third audio stream ASc to the first speaker 1311, the second speaker 1312, and the third speaker 1313, respectively.

. Meanwhile, when the second image 1220 displayed in the second display 180b and the third image 1230 displayed in the third display 180c are switched, the display manager 527 in the hypervisor 505 may be configured to map the third window VSc and the second window VSb to the second hardware overlay 1212 and the third hardware overlay 1213, respectively based on the input signal, etc.

. Meanwhile, when the second image 1220 displayed on the second display 180b and the third image 1230 displayed on the third display 180c are switched, the audio manager 521 in the hypervisor 505 may be configured to map the third audio stream ASc and the second audio stream ASb to the second speaker 1312 and the third speaker 1313, respectively, based on the input signal, etc. Therefore, mapping between speakers may be dynamically changed.

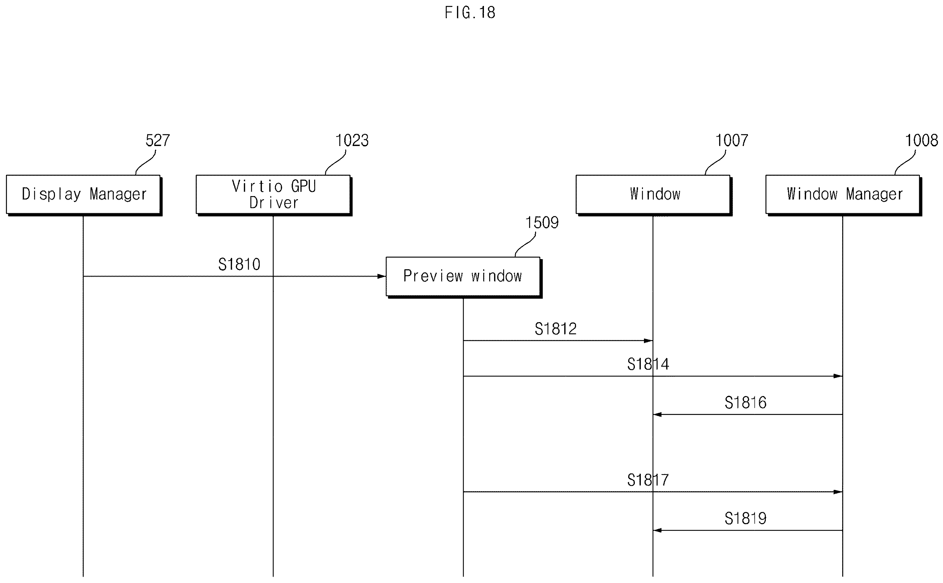

. FIG. 18 is a view describing dynamic screen configuration change.

. Referring to the figure, the display manager 527 may be configured to request creation of a preview window 1509 (S1810).

. Next, the preview window 1509 in the hypervisor may copy or clone each display window (S1812).

. Next, the generated window 1007 may be registered in the window manager 1008 (S1814).

. Next, the window manager 1008 may be configured to set the generated preview window according to a configuration set in advance (S1816).

. Next, one of a plurality of images in the preview window may be selected based on the input signal.

. Next, the preview window 1509 in the hypervisor may be configured to request discharge configuration change to the window manager 1008 based on selection of any one image in the preview window (S1817).

. Next, the window manager 1008 may be configured to dynamically change the attribute of the window (S1819). Accordingly, dynamic screen configuration change may be performed.

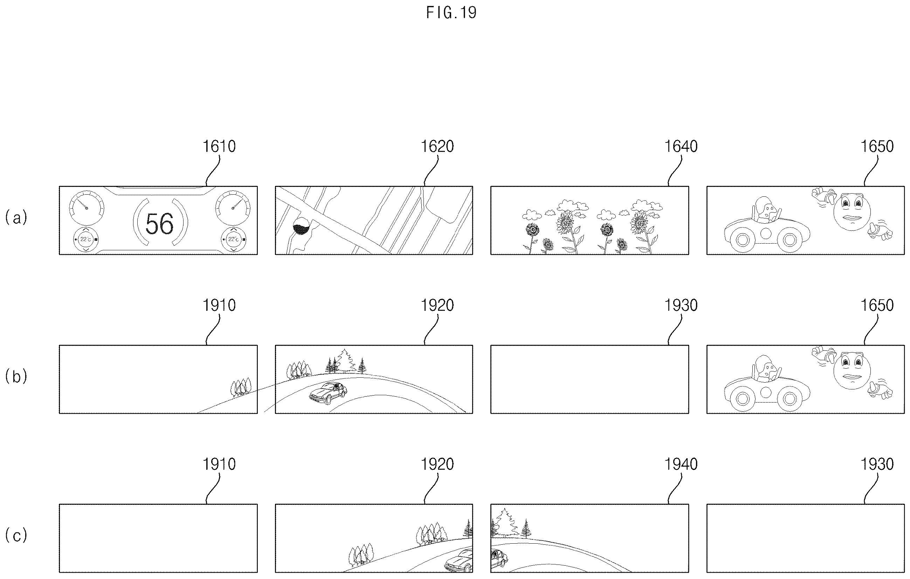

. FIG. 19 is a view describing operation creation of the virtual display, and screen output or screen removal of an entire display.

. First, (a) of FIG. 19 shows that the first image 1610, the second image 1620, the third image 1630, and the fourth image 1650 are displayed on the cluster display 180a, the AVN display 180b, the left RSE display, and the right RSE display, respectively.

. Meanwhile, as in (b) of FIG. 19, the signal processing device 170 may be configured to display the same screen on the cluster display 180a, the AVN display 180b, and the left RSE display based on the input signal.

. At this time, the signal processing device 170 may be configured to generate the virtual display 1025, and allocate the virtual display to the first operating system, for simultaneous output to three displays.

. Meanwhile, in response to the simultaneous output to three displays, the signal processing device 170 may be configured to allocate audio signals to some 1311 to 1314, and 1316 among the plurality of speakers, respectively, an audio signal corresponding to the fourth image 1650 to some other speakers 1315 and 1317, and output respective sounds.

. Meanwhile, as in (c) of FIG. 19, the signal processing device 170 may be configured to display the same screen on the cluster display 180a, the AVN display 180b, the left RSE display, and the right RSE display based on a second input signal.

. At this time, the signal processing device 170 may be configured to generate two virtual displays 1025, and allocate two virtual displays to the first operating system, for simultaneous output to four displays.

. Meanwhile, in response to the simultaneous output to four displays, the signal processing device 170 may be configured to allocate the audio signals to the plurality of speakers 1311 to 1317, and output respective sounds.

. While the embodiments of the present disclosure have been illustrated and described above, the present disclosure is not limited to the aforementioned specific embodiments, various modifications may be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. A signal processing device comprising:
a processor configured to perform signal processing for a display mounted on a vehicle,
wherein the processor is configured to execute a hypervisor and execute first to third virtual machines on the hypervisor,
wherein the second virtual machine is configured to operate for a first display and the third virtual machine is configured to operate for a second display,
wherein the first virtual machine or the hypervisor is configured to execute a display manager to control an image displayed on the first display or the second display and an audio manager to control a sound corresponding to the image displayed on the first display or the second display, and
wherein the audio manager is configured to allocate corresponding audio signals to a plurality of speakers in a vehicle, respectively.

2. The signal processing device of claim 1, wherein the audio manager is configured to allocate a first audio signal to a first speaker in response to displaying a first image on the first display and allocate a second audio signal to a second speaker in response to displaying a second image on the second display.

3. The signal processing device of claim 1, wherein the audio manager is configured to allocate the first audio signal in which noise canceling is not performed to the first speaker and allocate the second audio signal in which the noise canceling is performed to the second speaker.

4. The signal processing device of claim 1, wherein the audio manager is configured to allocate an audio signal in which the noise canceling is not performed to some of the plurality of speakers and allocate an audio signal in which the noise canceling is performed to some other speakers.

5. The signal processing device of claim 1, wherein the audio manager is configured to allocate an audio signal including safety driving information to some of the plurality of speakers and allocate an audio signal not including the safety driving information to some other speakers.

6. The signal processing device of claim 1, wherein the audio manager is configured to allocate a first audio signal to a first speaker in response to displaying a first image on the first display, allocate a second audio signal to a second speaker in response to displaying a second image on the second display, and allocate a third audio signal to a third speaker in response to displaying a third image on a third display.

7. The signal processing device of claim 6, wherein the audio manager is configured to allocate the second audio signal to the second speaker and allocate the third audio signal to the second speaker in response to the third image being displayed on the second display and the second image being displayed on the third display.

8. The signal processing device of claim 1, wherein the audio manager is configured to allocate a first audio signal corresponding to the second image to the second speaker in response to displaying the first image on the first display and displaying the second image on the second display, and allocate a second audio signal corresponding to a third image to a third speaker in response to displaying the third image on a third display.

9. The signal processing device of claim 8, wherein the audio manager is configured to allocate the first audio signal to the third speaker and allocate the second audio signal to the second speaker in response to the third image being displayed on the second display and the second image being displayed on the third display.

10. The signal processing device of claim 1, wherein the audio manager is configured to set a shared memory based on the hypervisor for transmission of the same audio signal to the second virtual machine and the third virtual machine.

11. The signal processing device of claim 1, wherein the audio manager is configured to transmit first audio data to the shared memory based on the hypervisor, and
wherein the second virtual machine and the third virtual machine are configured to receive the first audio data in the shared memory to output the same sound from speakers managed, respectively.

12. The signal processing device of claim 1, wherein the second virtual machine and the third virtual machine are executed by different operating systems, and
wherein the audio manager is configured to integratedly manage an audio signal in the second virtual machine and an audio signal in the third virtual machine, or control an audio focus.

13. The signal processing device of claim 1, wherein the first virtual machine or the hypervisor further is configured to execute an audio server to determine an output path of an audio signal.

14. The signal processing device of claim 1, wherein the first virtual machine or the hypervisor further is configured to execute a window manager to set a position and an attribute of a window based on window information loaded upon booting.

15. A signal processing device comprising:
a processor configured to perform signal processing for a display mounted on a vehicle,
wherein the processor is configured to execute a hypervisor,
the hypervisor is configured to execute a display manager to control an image displayed on a first display or a second display and an audio manager to control a sound corresponding to the image displayed on the first display or the second display, and
wherein the audio manager is configured to allocate corresponding audio signals to a plurality of speakers in a vehicle, respectively.

16. The signal processing device of claim 15, wherein the audio manager is configured to allocate an audio signal in which noise canceling is not performed to some of the plurality of speakers, and allocate an audio signal in which the noise canceling is performed to some other speakers.

17. The signal processing device of claim 15, wherein the audio manager is configured to allocate an audio signal including safety driving information to some of the plurality of speakers, and allocate an audio signal not including the safety driving information to some other speakers.

18. The signal processing device of claim 1, wherein the audio manager is configured to transmit first audio data to the shared memory based on the hypervisor, and
a plurality of virtual machines executed by the processor are configured to receive the first audio data in the shared memory to output the same sound from speakers managed, respectively.

19. The signal processing device of claim 18, wherein the plurality of virtual machines are executed by different operating systems, and
the audio manager is configured to integratedly manage respective audio signals in the plurality of virtual machines, or control an audio focus.

20. A display apparatus for vehicle, comprising:
a first display;
a second display; and
a signal processing device including a processor configured to perform signal processing for the first display or the second display,
wherein the signal processing device includes a signal processing device of any one of claims 1 to 19.
